# EUROPEAN PATENT APPLICATION

(11) **EP 4 529 287 A1**
(43) Date of publication of application: **26.03.2025**
(21) Application number: 23822862.1
(22) Date of filing: 17.05.2023
(51) Int. Cl.: H04W 52/02

(54) **COMMUNICATION METHOD AND APPARATUS**

(30) Priority: 16.06.2022 CN 202210682522
(71) Applicant: Huawei Technologies Co., Ltd., Shenzhen, Guangdong 518129 (CN)
(72) Inventor: WANG, Feng, Shenzhen, Guangdong 518129 (CN); LUO, Zhihu, Shenzhen, Guangdong 518129 (CN); JIN, Zhe, Shenzhen, Guangdong 518129 (CN); XUE, Lixia, Shenzhen, Guangdong 518129 (CN)
(74) Representative: Goddar, Heinz J.
(86) International application number: PCT/CN2023/094707
(87) International publication number: WO 2023/241292

(57) **Abstract**

This application provides a communication method and apparatus. A terminal may obtain configuration information of a wake-up signal of a camped cell and configuration information of a wake-up signal of another cell from a network device, to receive the wake-up signal of the camped cell and/or the wake-up signal of the another cell based on a signal measurement requirement of the terminal. In this way, power consumption of the terminal is reduced, and a signal of the camped cell and/or a signal of the another cell are/is measured. This can avoid a case that a main radio frequently wakes up to measure cell quality, to reduce energy consumption of the terminal.

## Description

This application claims priority to Chinese Patent Application No. 202210682522.9, filed with the China National Intellectual Property Administration on June 16, 2022 and entitled "COMMUNICATION METHOD AND APPARATUS", which is incorporated herein by reference in its entirety.

### TECHNICAL FIELD

Embodiments of this application relate to the communication field, and more specifically, to a communication method and apparatus.

### BACKGROUND

Currently, to further reduce power consumption of a terminal, the terminal may wake up when there is data transmission. This mechanism may be implemented through two receivers. For example, one is a main radio of the terminal, and the other is a wake-up receiver (wake-up receiver, WUR) of the terminal. The wake-up receiver may monitor a wake-up signal with ultra-low power consumption. After receiving the wake-up signal, the wake-up receiver may trigger the main radio to wake up. If the wake-up receiver does not trigger the main radio to wake up, the main radio is in a disabled state or a deep sleep state. When the main radio is enabled, the main radio may be configured to perform data transmission, to further save energy of the terminal.

In a moving process, the terminal needs to measure signal quality of a camped cell and/or signal quality of another cell. It is assumed that in the moving process of the terminal, the main radio is disabled or is in the deep sleep state, and the terminal cannot obtain the signal quality of the camped cell and/or signal quality of a neighboring cell. In this case, how to measure the signal quality of the camped cell and/or the signal quality of the another cell based on an actual requirement becomes a technical problem that needs to be resolved.

### SUMMARY

This application provides a communication method and apparatus. A terminal may obtain configuration information of a wake-up signal of a camped cell and configuration information of a wake-up signal of another cell from a network device, to receive the wake-up signal of the camped cell and/or the wake-up signal of the another cell based on a signal measurement requirement of the terminal. In this way, power consumption of the terminal is reduced, and the terminal measures a signal of the camped cell and/or a signal of a neighboring cell.

According to a first aspect, a communication method is provided. The method may be performed by a terminal, or may be performed by a component (for example, a chip or a circuit) of the terminal. This is not limited.

The method includes: The terminal receives first configuration information and second configuration information from a network device, where the first configuration information includes resource information of a first signal of a first cell, the second configuration information includes resource information of M second signals of M second cells, and M is an integer greater than or equal to 1. The first signal and the second signal are signals transmitted on a link of a wake-up receiver WUR, the first cell is a camped cell of a terminal, and the second cell is different from the first cell. The terminal receives the first signal based on the first configuration information; and/or the terminal receives one or more of the M second signals based on the second configuration information.

Based on the foregoing technical solution, the terminal may obtain, based on the first configuration information and the second configuration information, resource information for sending signals of the camped cell and another cell, so that the terminal receives a signal of the camped cell and/or a signal of the another cell based on an actual requirement. Because the first signal and the second signal are the signals transmitted on the link of the wake-up receiver WUR, even if the terminal is in a disabled state or a deep sleep state, the terminal may receive the signal of the camped cell and/or the signal of the another cell by using the wake-up receiver. Further, the terminal may measure signal quality of the camped cell and/or signal quality of the another cell based on the received first signal and/or the received second signal.

In a possible implementation, that the terminal receives the first signal based on the first configuration information; and/or the terminal receives one or more of the M second signals based on the second configuration information includes: The terminal receives the first signal based on the first configuration information, and when signal quality of the first signal is less than or equal to a first threshold, the terminal receives one or more of the M second signals based on the second configuration information.

Based on the foregoing technical solution, when the signal quality of the first signal received by the terminal in the camped cell is low, the terminal can receive the signal of the cell other than the camped cell, to prepare for cell reselection.

In a possible implementation, that the terminal receives the first signal based on the first configuration information; and/or the terminal receives the one or more of the M second signals based on the second configuration information includes: When no first signal is received based on the first configuration information within first duration, the terminal receives the one or more of the M second signals based on the second configuration information.

A start moment of the "first duration" in this application may be understood as, for example, that a moment at which the terminal device starts to prepare to receive the first signal may be understood as the start moment of the "first duration". For another example, a moment at which the terminal device starts to prepare to receive the first configuration information and the second configuration information may be understood as the start moment of the "first duration". It should be understood that a person skilled in the art may flexibly determine the start moment of the "first duration" based on an actual situation.

Based on the foregoing technical solution, when failing to receive the signal of the camped cell within a period of time, the terminal receives the signal of the cell other than the camped cell, so that a problem that a delay is high because the terminal waits to receive information about the camped cell can be reduced. In addition, if no signal of the camped cell is received for a long time, according to the technical solution of this application, waking up a main radio is further avoided, to be specific, waking up the main radio to measure signal quality of the camped cell and signal quality of another cell is avoided. In this application, when failing to receive the signal of the camped cell within a period of time, the terminal may measure the quality of the another cell by using the wake-up receiver, to determine whether to perform cell reselection. In this way, power consumption of the terminal can be reduced, and signal quality of a surrounding cell can be monitored. This can avoid a case that the main radio wakes up to measure cell quality, to reduce energy consumption of the terminal.

In a possible implementation, the M second cells include a third cell, the third cell is a neighboring cell of the first cell, and a signal corresponding to the third cell in the M second signals is a third signal. That the terminal receives the first signal based on the first configuration information; and/or the terminal receives one or more of the M second signals based on the second configuration information includes: The terminal receives the first signal based on the first configuration information, and the terminal receives the third signal based on the second configuration information.

Based on the foregoing technical solution, when the terminal simultaneously receives the first signal and the second signal, because there may be a plurality of second signals, the terminal may receive only the signal of the camped cell and a signal of a neighboring cell of the camped cell, so that power consumption of the terminal can be further reduced.

In a possible implementation, the M second cells include a third cell and a fourth cell, where the third cell is a neighboring cell of the first cell, and the fourth cell is a neighboring cell of the third cell. A signal corresponding to the third cell in the M second signals is a third signal, and a signal corresponding to the fourth cell in the M second signals is a fourth signal. That the terminal receives the first signal based on the first configuration information; and/or the terminal receives one or more of the M second signals based on the second configuration information includes: The terminal receives the first signal based on the first configuration information, and the terminal receives the third signal based on the second configuration information.

In other words, the foregoing implementation may alternatively be understood as that the terminal receives the third signal, but does not receive the fourth signal.

In this application, the second cell may include one or more cells other than the first cell. If the second cell includes a plurality of cells, the foregoing technical solution may alternatively be understood as that when simultaneously receiving the first signal and the second signal, the terminal may need to receive only the first signal and a signal (namely, the third signal) in the neighboring cell of the first cell, for example, not receive a signal (namely, the fourth signal) in a neighboring cell of the neighboring cell of the first cell, so that power consumption of the terminal can be further reduced.

In a possible implementation, the method further includes: The terminal performs handover from the first cell to the third cell based on the quality of the first signal and quality of the third signal.

Based on the foregoing technical solution, in this application, the terminal may implement cell reselection based on the signal quality of the camped cell and signal quality of the neighboring cell, so that data transmission performance can be ensured.

In a possible implementation, that the terminal receives one or more of the M second signals based on the second configuration information includes: The terminal receives the third signal based on the second configuration information; and/or the terminal receives the fourth signal based on the second configuration information.

Based on the foregoing technical solution, in this application, after completing cell reselection, the terminal may still receive, based on a reselected cell, a wake-up signal of the reselected cell and/or a wake-up signal of a neighboring cell of the reselected cell. Therefore, even after the cell reselection, the main radio may not need to wake up to receive configuration information of the reselected cell and configuration information of the neighboring cell of the reselected cell, to reduce energy consumption of the terminal.

In a possible implementation, the terminal includes a first receiver and a second receiver, and the method further includes: The terminal reports capability information of the first receiver and/or capability information of the second receiver to the network device, where energy consumption of the first receiver is less than energy consumption of the second receiver.

In a possible implementation, the capability information of the first receiver includes signal receiving sensitivity information of the first receiver and/or level identification information of the first receiver; and the capability information of the second receiver includes signal receiving sensitivity information of the second receiver and/or level identification information of the second receiver.

Based on the foregoing technical solution, the terminal may report the capability information of the first receiver and the capability information of the second receiver, so that the network device can determine, based on the capability information, to send the first configuration information or the first configuration information and the second configuration information to the terminal. In other words, the network device may determine, based on the capability information, whether capabilities of the two receivers of the terminal are the same, to determine to send specific configuration information. In this way, a quantity of times of the main radio waking up to receive the configuration information is reduced, and energy consumption of the terminal is reduced.

In a possible implementation, that the terminal receives first configuration information and second configuration information from a network device includes: The terminal receives the first configuration information from the network device. When the signal quality of the first signal is greater than or equal to a second threshold, the terminal sends first information to the network device, where the first information is used to request the second configuration information.

In a possible implementation, the method further includes: The terminal reports signal quality of the first signal to the network device. This implementation may alternatively be understood as that that the terminal receives first configuration information and second configuration information from a network device includes: The terminal receives the first configuration information from the network device; the terminal reports signal quality of the first signal to the network device; and the terminal receives the second configuration information from the network device.

In a possible implementation, the terminal may first obtain the first configuration information, and receive the first signal based on the first configuration information. If the signal quality of the first signal is good, the terminal or the network device determines that a terminal is capable of receiving a signal of the second cell, and then obtains the second configuration information.

Based on the foregoing technical solution, a manner in which the terminal obtains the first configuration information and the second configuration information is more flexible.

In a possible implementation, the first configuration information is carried in radio resource control release information or a system message, and/or the second configuration information is carried in radio resource control release information or a system message.

In a possible implementation, the first threshold and the second threshold are configured by a network device, the first threshold and the second threshold are predefined in a protocol, or the first threshold and the second threshold are related to signal quality measured by the second receiver of the terminal.

In a possible implementation, the first duration is configured by the network device, or the first duration is predefined in a protocol.

According to a second aspect, a communication method is provided. The method may be performed by a terminal, or may be performed by a component (for example, a chip or a circuit) of the terminal. This is not limited.

The method includes: The terminal receives first configuration information from a network device, where the first configuration information includes resource information of a first signal of a first cell, and the first signal is a signal transmitted on a link of a first receiver of the terminal. The terminal receives the first signal based on the first configuration information, where the terminal includes the first receiver and a second receiver, energy consumption of the first receiver is less than energy consumption of the second receiver, and the first cell is a camped cell of the terminal.

In a possible implementation, the first receiver is a main radio, and the second receiver is a wake-up receiver.

In a possible implementation, when signal quality of the first signal is less than or equal to a third threshold, the second receiver of the terminal wakes up, and the second receiver receives a fifth signal, where the fifth signal is a signal in a second cell, and the second cell is different from the first cell.

In a possible implementation, the fifth signal is a synchronization signal SSB or a channel state information-reference signal CSI-RS.

Based on the foregoing technical solution, when the first signal received by the first receiver is weak, the second receiver wakes up, and the second receiver receives a signal of the second cell. In this case, the terminal may measure the signal quality of the first cell and/or signal quality of the second cell based on an actual requirement, so that the main radio is enabled as little as possible, and energy consumption of the terminal is reduced.

In a possible implementation, the second receiver wakes up based on a first periodicity, and the second receiver receives the fifth signal, where the fifth signal is the signal in the second cell, the first periodicity is a wake-up periodicity of the second receiver, and the second cell is different from the first cell.

Based on the foregoing technical solution, the second receiver periodically wakes up based on the first periodicity. After waking up, the second receiver receives the signal of the second cell. In this case, the terminal may measure the signal quality of the first cell and/or signal quality of the second cell based on an actual requirement, so that the main radio is enabled as little as possible, and energy consumption of the terminal is reduced.

In a possible implementation, the first periodicity is configured by the network device.

In a possible implementation, the second receiver of the terminal wakes up based on a moment at which the first signal is received for the last time and second duration, and the second receiver receives a fifth signal, where the fifth signal is the signal in the second cell, and the second cell is different from the first cell.

Based on the foregoing technical solution, the terminal may determine, based on the moment at which the first signal is received and the second duration, whether to trigger the second receiver to wake up, or determine whether the second receiver needs to actively wake up, to receive the fifth signal. In this case, the terminal may measure the signal quality of the first cell and/or signal quality of the second cell based on an actual requirement, so that the main radio is enabled as little as possible, and energy consumption of the terminal is reduced.

In a possible implementation, the method further includes: The terminal reports capability information of the first receiver of the terminal and/or capability information of the second receiver of the terminal to the network device.

Based on the foregoing technical solution, the terminal may report capability information to the network device, so that the network device determines to send the first configuration information or the first configuration information and the second configuration information to the terminal. In other words, the terminal reports the capability information, so that the network device determines whether capabilities of the two receivers of the terminal are the same. In this way, a quantity of times of the main radio waking up to receive the configuration information can be reduced, and energy consumption of the terminal can be reduced.

In a possible implementation, the method further includes: The terminal determines that the quality of the first signal is less than or equal to a fourth threshold; or the terminal reports the signal quality of the first signal to the network device.

Based on the foregoing technical solution, the network device may determine, based on the signal quality of the first signal, to send the first configuration information or the first configuration information and the second configuration information to the terminal. In other words, in this application, the terminal or the network device may further determine, based on the quality of the first signal, whether the capabilities of the two receivers of the terminal are the same. In this way, a quantity of times of the main radio waking up to receive the configuration information can be reduced, and energy consumption of the terminal can be reduced.

In a possible implementation, the second duration is configured by the network device, or the second duration is predefined in a protocol.

In a possible implementation, the first periodicity is configured by the network device, or the first periodicity is predefined in a protocol.

According to a third aspect, a communication method is provided. The method may be performed by a terminal, or may be performed by a component (for example, a chip or a circuit) of the terminal. This is not limited.

The method includes: The terminal reports second information to a network device, where the second information indicates at least a capability of a first receiver of the terminal. The terminal includes the first receiver and a second receiver, and energy consumption of the first receiver is less than energy consumption of the second receiver.

In a possible implementation, the second information includes capability information of the first receiver, or the second information includes capability information of the first receiver and capability information of the second receiver.

In a possible implementation, the capability information of the first receiver includes signal receiving sensitivity information of the first receiver and/or level identification information of the first receiver; and capability information of the second receiver includes signal receiving sensitivity information of the second receiver and/or level identification information of the second receiver.

Based on the foregoing technical solution, the terminal may report the capability information of the first receiver and/or the capability information of the second receiver, so that the network device can determine, based on the capability information, whether the capability of the first receiver and the capability of the second receiver are the same.

In a possible implementation, the second information further includes quality of a first signal.

Based on the foregoing technical solution, in this application, the terminal may further report the quality of the first signal received by the first receiver. In other words, the network device learns of a signal processing capability of the first receiver based on the quality of the first signal, so that the network device can determine, based on the quality of the first signal, whether the capability of the first receiver and the capability of the second receiver are the same.

In a possible implementation, the method further includes: The terminal receives first configuration information and second configuration information from a network device, where the first configuration information includes resource information of a first signal of a first cell, the second configuration information includes resource information of M second signals of M second cells, the first signal and a second signal are signals transmitted on a link of a wake-up receiver WUR, the first cell is a camped cell of the terminal, the second cell is different from the first cell, and M is an integer greater than or equal to 1. The terminal receives the first signal based on the first configuration information; and/or the terminal receives one or more of the M second signals based on the second configuration information.

Based on the foregoing technical solution, the terminal may obtain configuration information of a wake-up signal of the camped cell and configuration information of a wake-up signal of another cell from the network device, to receive the wake-up signal of the camped cell and/or the wake-up signal of the another cell based on a signal measurement requirement of the terminal. In this way, power consumption of the terminal is reduced, and a signal of the camped cell and/or a signal of a neighboring cell and/is measured.

In a possible implementation, the method further includes: The terminal receives the first configuration information from the network device, where the first configuration information includes the resource information of the first signal of the first cell, and the first signal is a signal transmitted on a link of the first receiver of the terminal. The first receiver of the terminal receives the first signal based on the first configuration information. When the signal quality of the first signal is less than or equal to a third threshold, the second receiver of the terminal wakes up, and the second receiver receives a fifth signal, where the fifth signal is a signal in the second cell; the second receiver of the terminal wakes up based on a first periodicity, and the second receiver receives a fifth signal, where the fifth signal is a signal in the second cell, and the first periodicity is a wake-up periodicity of the second receiver; or the second receiver of the terminal wakes up based on a moment at which the first signal is received for the last time and second duration, and the second receiver receives a fifth signal, where the fifth signal is a signal in the second cell.

Based on the foregoing technical solution, in this application, the first receiver may trigger the second receiver to wake up, or the second receiver actively wakes up, and the second receiver receives the signal of the second cell. In this case, in a moving process, the terminal may measure the signal quality of the first cell and/or signal quality of the second cell based on an actual requirement, to measure the first cell and/or the second cell. Because the terminal may monitor the first signal through the first receiver, a main radio is enabled as little as possible, and energy consumption of the terminal is reduced.

According to a fourth aspect, a communication method is provided. The method may be performed by a network device (for example, a base station), or may be performed by a component (for example, a chip or a circuit) of the network device. This is not limited.

For beneficial effects corresponding to network-side technical solutions and beneficial effects corresponding to apparatuses, refer to the descriptions of the beneficial effects of the terminal sides. Details are not described herein again.

The method includes: The network device sends first configuration information and second configuration information to a terminal, where the first configuration information includes resource information of a first signal of a first cell, the second configuration information includes resource information of M second signals of M second cells, and M is an integer greater than or equal to 1. The first signal and the second signal are signals transmitted on a link of a wake-up receiver WUR, the first cell is a camped cell of the terminal, and the second cell is different from the first cell.

In a possible implementation, the M second cells include a third cell, the third cell is a neighboring cell of the first cell, and a signal corresponding to the third cell in the M second signals is a third signal.

In a possible implementation, the M second cells include a third cell and a fourth cell, the third cell is a neighboring cell of the first cell, the fourth cell is a neighboring cell of the third cell, a signal corresponding to the third cell in the M second signals is a third signal, and a signal corresponding to the fourth cell in the M second signals is a fourth signal.

In a possible implementation, the method further includes: The network device receives capability information of a first receiver of the terminal and/or capability information of a second receiver of the terminal, where energy consumption of the first receiver is less than energy consumption of the second receiver. That the network device sends first configuration information and second configuration information to a terminal includes: The network device sends the first configuration information and the second configuration information to the terminal based on the capability information of the first receiver and/or the capability information of the second receiver.

In a possible implementation, the capability information of the first receiver includes signal receiving sensitivity information of the first receiver and/or level identification information of the first receiver; and the capability information of the second receiver includes signal receiving sensitivity information of the second receiver and/or level identification information of the second receiver.

In a possible implementation, that the network device sends first configuration information and second configuration information to a terminal includes: The network device sends the first configuration information to the terminal. The network device receives first information from the terminal, where the first information is used to request the second configuration information. The network device sends the second configuration information to the terminal based on the first information.

In a possible implementation, that the network device sends first configuration information and second configuration information to a terminal includes: The network device sends the first configuration information to the terminal. The network device receives signal quality of the first signal from the terminal. When the signal quality of the first signal is greater than or equal to a second threshold, the network device sends the second configuration information to the terminal.

In a possible implementation, the first configuration information is carried in radio resource control release information or a system message, and/or the second configuration information is carried in radio resource control release information or a system message.

In a possible implementation, the second threshold is configured by the network device, the second threshold is predefined in a protocol, or the second threshold is related to signal quality measured by the second receiver of the terminal.

According to a fifth aspect, a communication method is provided. The method may be performed by a network device (for example, a base station), or may be performed by a component (for example, a chip or a circuit) of the network device. This is not limited.

In a possible implementation, the network device receives capability information of a first receiver of a terminal and/or capability information of a second receiver of the terminal, where energy consumption of the first receiver is less than energy consumption of the second receiver. The network device sends first configuration information to the terminal based on second information, where the first configuration information includes resource information of a first signal of a first cell, and the first signal is a signal transmitted on a link of the first receiver of the terminal.

In a possible implementation, the capability information of the first receiver includes signal receiving sensitivity information of the first receiver and/or level identification information of the first receiver, and the capability information of the second receiver includes signal receiving sensitivity information of the second receiver and/or level identification information of the second receiver.

In a possible implementation, the first configuration information is carried in radio resource control release information or a system message.

According to a sixth aspect, a communication method is provided. The method may be performed by a network device (for example, a base station), or may be performed by a component (for example, a chip or a circuit) of the network device. This is not limited.

The method includes: The network device receives second information reported by a terminal, where the second information indicates at least a capability of a first receiver of the terminal.

In a possible implementation, the second information includes capability information of the first receiver and/or capability information of a second receiver, where energy consumption of the first receiver is less than energy consumption of the second receiver.

In a possible implementation, the capability information of the first receiver includes signal receiving sensitivity information of the first receiver and/or level identification information of the first receiver; and the capability information of the second receiver includes signal receiving sensitivity information of the second receiver and/or level identification information of the second receiver.

In a possible implementation, the second information includes quality of the first signal.

In a possible implementation, the method further includes: The network device sends first configuration information and second configuration information to the terminal based on second information, where the first configuration information includes the resource information of the first signal of the first cell, the second configuration information includes resource information of M second signals of M second cells, the first signal and a second signal are signals transmitted on the link of the first receiver, the first cell is a camped cell of the terminal, the second cell is different from the first cell, and M is an integer greater than or equal to 1.

In a possible implementation, the method further includes: The network device sends the first configuration information to the terminal based on the second information, where the first configuration information includes the resource information of the first signal of the first cell, the first signal is the signal transmitted on the link of the first receiver, the first cell is a camped cell of the terminal, and M is an integer greater than or equal to 1.

According to a seventh aspect, a communication apparatus is provided. The apparatus is configured to perform the method according to any one of the possible implementations of the first aspect to the third aspect. Specifically, the apparatus may include units and/or modules, for example, a transceiver unit and/or a processing unit, configured to perform the method according to any one of the possible implementations of the first aspect to the third aspect.

In an implementation, the apparatus is a terminal. When the apparatus is a communication device, a communication unit may be a transceiver or an input/output interface; and the processing unit may be at least one processor. Optionally, the transceiver may be a transceiver circuit. Optionally, the input/output interface may be an input/output circuit.

In another implementation, the apparatus is a chip, a chip system, or a circuit used in a terminal. When the apparatus is the chip, the chip system, or the circuit used in a communication device, a communication unit may be an input/output interface, an interface circuit, an output circuit, an input circuit, a pin, a related circuit, or the like on the chip, the chip system, or the circuit; and the processing unit may be the at least one processor, a processing circuit, a logic circuit, or the like.

According to an eighth aspect, a communication apparatus is provided. The apparatus is configured to perform the method according to any one of the possible implementations of the fourth aspect to the sixth aspect. Specifically, the apparatus may include units and/or modules, for example, a transceiver unit and/or a processing unit, configured to perform the method according to any one of the possible implementations of the fourth aspect to the sixth aspect.

In an implementation, the apparatus is a terminal. When the apparatus is a communication device, a communication unit may be a transceiver or an input/output interface; and the processing unit may be at least one processor. Optionally, the transceiver may be a transceiver circuit. Optionally, the input/output interface may be an input/output circuit.

In another implementation, the apparatus is a chip, a chip system, or a circuit used in a terminal. When the apparatus is the chip, the chip system, or the circuit used in a communication device, a communication unit may be an input/output interface, an interface circuit, an output circuit, an input circuit, a pin, a related circuit, or the like on the chip, the chip system, or the circuit; and the processing unit may be the at least one processor, a processing circuit, a logic circuit, or the like.

According to a ninth aspect, a communication apparatus is provided. The apparatus includes at least one processor, configured to execute a computer program or instructions stored in a memory, to perform the method according to any one of the possible implementations of the first aspect to the third aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a terminal.

In another implementation, the apparatus is a chip, a chip system, or a circuit used in a terminal.

According to a tenth aspect, a communication apparatus is provided. The apparatus includes at least one processor, configured to execute a computer program or instructions stored in a memory, to perform the method according to any one of the possible implementations of the fourth aspect to the sixth aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a network device.

In another implementation, the apparatus is a chip, a chip system, or a circuit used in a network device.

According to an eleventh aspect, this application provides a processor, including an input circuit, an output circuit, and a processing circuit. The processing circuit is configured to receive a signal through the input circuit and transmit a signal through the output circuit, to enable the processor to perform the method according to any one of the possible implementations of the first aspect to the sixth aspect.

In a specific implementation process, the processor may be one or more chips, the input circuit may be an input pin, the output circuit may be an output pin, and the processing circuit may be a transistor, a gate circuit, a trigger, any type of logic circuit, or the like. An input signal received by the input circuit may be received and input by, for example, but not limited to, a transceiver, a signal output by the output circuit may be output to, for example, but not limited to, a transmitter and transmitted by the transmitter, and the input circuit and the output circuit may be a same circuit, where the circuit separately functions as the input circuit and the output circuit at different moments. Specific implementations of the processor and the various circuits are not limited in this embodiment of this application.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a twelfth aspect, a processing device is provided, and includes a processor and a memory. The processor is configured to: read instructions stored in the memory, receive a signal through a transceiver, and transmit a signal through a transmitter, to perform the method according to any one of the possible implementations of the first aspect to the sixth aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in this embodiment of this application.

It should be understood that a related data exchange process such as sending of indication information may be a process of outputting the indication information from the processor, and receiving of capability information may be a process of receiving input capability information by the processor. Specifically, data output by the processor may be output to the transmitter, and input data received by the processor may be from the transceiver. The transmitter and the transceiver may be collectively referred to as transceivers.

The processing device in the twelfth aspect may be one or more chips. The processor in the processing device may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory. The memory may be integrated into the processor, or may be located outside the processor and exist independently.

According to a thirteenth aspect, a computer-readable storage medium is provided. The computer-readable medium stores program code to be executed by a device, and the program code is for performing the method according to any one of the possible implementations of the first aspect to the fourth aspect.

According to a fourteenth aspect, a computer program product including instructions is provided. When the computer program product runs on a computer, the computer is enabled to perform the method according to any one of the possible implementations of the first aspect to the sixth aspect.

According to a fifteenth aspect, a chip system is provided, and includes a processor, configured to: invoke a computer program from a memory and run the computer program, to enable a device on which the chip system is installed to perform the method according to any one of the implementations of the first aspect to the sixth aspect.

According to a sixteenth aspect, a communication system is provided. The communication system includes a terminal and a network device. The terminal is configured to perform the method according to any one of the possible implementations of the first aspect to the third aspect, and the network device is configured to perform the method according to any one of the possible implementations of the fourth aspect to the sixth aspect.

### BRIEF DESCRIPTION OF DRAWINGS

FIG. 1 is a diagram of a system architecture to which this application is applicable;
FIG. 2 is a diagram of a receiver of a terminal according to this application;
FIG. 3 is a schematic flowchart of a communication method 300 according to this application;
FIG. 4 is a schematic flowchart of a communication method 400 according to this application;
FIG. 5 is a schematic flowchart of a communication method 500 according to this application;
FIG. 6 is a block diagram of a communication apparatus 100 according to this application; and
FIG. 7 is a block diagram of a communication apparatus 200 according to this application.

### DESCRIPTION OF EMBODIMENTS

The following describes technical solutions in embodiments of this application with reference to accompanying drawings.

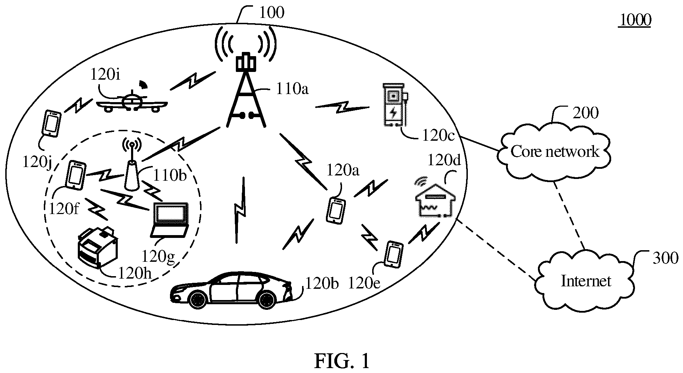

FIG. 1 is a diagram of an architecture of a communication system 1000 used in an embodiment of this application. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, functions of a core network device and logical functions of the radio access network device are integrated into a same physical device, or a part of functions of a core network device and a part of functions of the radio access network device are integrated into one physical device. Terminals may be connected to each other in a wired or wireless manner, and radio access network devices may be connected to each other in a wired or wireless manner. FIG. 1 is merely a diagram. The communication system may further include other network devices, for example, may further include a wireless relay device and a wireless backhaul device, which are not shown in FIG. 1.

The radio access network device may be, for example, a base station (base station), an evolved NodeB (evolved NodeB, eNodeB), a transmission reception point (transmission reception point, TRP), a next generation base station (next generation NodeB, gNB) in a 5th generation (5th generation, 5G) mobile communication system, a next generation base station in a 6th generation (6th generation, 6G) mobile communication system, a base station in a future mobile communication system, or an access node in a Wi-Fi system. Alternatively, the radio access network device may be a module or a unit, for example, a central unit (central unit, CU) or a distributed unit (distributed unit, DU), that completes a part of functions of a base station. The CU herein implements functions of a radio resource control protocol and a packet data convergence protocol (packet data convergence protocol, PDCP) of the base station, and may further implement functions of a service data adaptation protocol (service data adaptation protocol, SDAP). The DU completes functions of a radio link control layer and a medium access control (medium access control, MAC) layer of the base station, and may further complete functions of a part or all of a physical layer. For specific descriptions of the foregoing protocol layers, refer to technical specifications related to a 3rd generation partnership project (3rd generation partnership project, 3GPP). The radio access network device may be a macro base station (for example, 110a in FIG. 1), may be a micro base station or an indoor base station (for example, 110b in FIG. 1), or may be a relay node or a donor node. A specific technology and a specific device form that are used by the radio access network device are not limited in this embodiment of this application. For ease of description, the following provides descriptions by using an example in which the base station serves as the radio access network device.

A terminal device may also be referred to as a terminal, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, autonomous driving, telemedicine, a smart grid, smart furniture, smart office, smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a mechanical arm, a smart home device, or the like. A specific technology and a specific device form that are used by the terminal are not limited in this embodiment of this application.

The base station and the terminal may be fixed or movable. The base station and the terminal may be deployed on land, including an indoor or outdoor scenario, and a handheld or a vehicle-mounted scenario; may be deployed on water; or may be deployed on an airplane, a balloon, and a man-made satellite. Application scenarios of the base station and the terminal are not limited in this embodiment of this application.

Roles of the base station and the terminal may be relative. For example, a helicopter or an uncrewed aerial vehicle 120i in FIG. 1 may be configured as a mobile base station, and for a terminal 120j accessing the radio access network 100 through 120i, the terminal 120i is a base station. However, for a base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b each in FIG. 1 may be referred to as a communication apparatus having a function of the base station, and 120a to 120j each in FIG. 1 may be referred to as a communication apparatus having a function of the terminal.

Communication between the base station and the terminal, between base stations, or between terminals may be performed by using a licensed spectrum, may be performed by using an unlicensed spectrum, or may be performed by using both the licensed spectrum and the unlicensed spectrum. Communication may be performed by using a spectrum below 6 gigahertz (gigahertz, GHz), may be performed by using a spectrum above 6 GHz, or may be performed by using both the spectrum below 6 GHz and the spectrum above 6 GHz. A spectrum resource for wireless communication is not limited in this embodiment of this application.

In this embodiment of this application, the function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. The function of the terminal may be performed by a module (for example, a chip or a modem) in the terminal, or may be performed by an apparatus including the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered with by a signal from a neighboring cell.

In this embodiment of this application, a time domain symbol may be an orthogonal frequency division multiplexing (orthogonal frequency division multiplexing, OFDM) symbol, or may be a discrete Fourier transform-spread-OFDM (Discrete Fourier Transform-spread-OFDM, DFT-s-OFDM) symbol. Unless otherwise specified, symbols in this embodiment of this application are time domain symbols.

To facilitate understanding of the technical solutions of this application, the following describes related technical terms in this application.

### 1. Wake-up receiver (wake-up receiver, WUR)

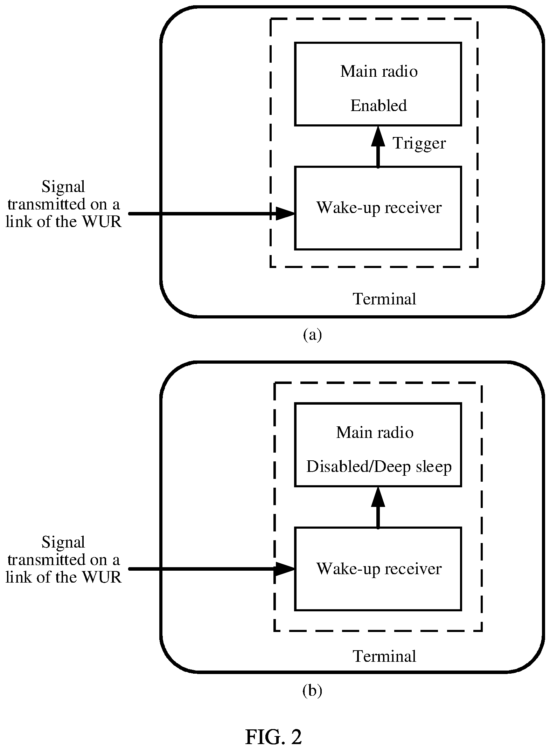

The wake-up receiver (or a wake-up circuit) can monitor a wake-up signal (wake-up signal, WUS) with low power consumption. After receiving the wake-up signal, the wake-up receiver may trigger a main radio to wake up, as shown in (a) in FIG. 2. For example, the wake-up receiver is a receiver that can receive a signal modulated by using on-off keying (on-off key, OOK) or frequency shift keying (frequency shift keying, FSK), the wake-up receiver is a receiver that can receive a signal on which fast Fourier transform (fast Fourier transform, FFT) or inverse fast Fourier transform (inverse fast fourier transform, IFFT) is not performed in a generation or decoding process, or the wake-up receiver is a receiver that can receive a Manchester coding signal.

The "wake-up receiver" in this application may alternatively be replaced with a "low-power-consumption receiver", an "ultra-low-power-consumption receiver", a "low-power-consumption wake-up receiver", an "ultra-low-power-consumption wake-up receiver", a "wake-up radio (wake-up radio)", a "secondary receiver", a "wake-up circuit", or the like. It should be understood that the WUR is merely a name of a receiver that can monitor the wake-up signal with the low power consumption in this application, and a name of the receiver that can monitor the wake-up signal with the low power consumption is not limited in this application.

### 2. Main radio (main radio)

In this application, the main radio corresponds to a wake-up receiver. Power consumption of the main radio is high, but the main radio has more functions and can receive and send more types of signals. For example, the main radio may be a receiver that normally communicates with a base station in a connected state and that is responsible for main data transmission. For another example, the main radio is a receiver that can perform FFT on a signal or perform IFFT on a signal. For another example, the main radio is a receiver whose local oscillator has high precision.

The wake-up receiver has lower energy consumption than the main radio. In other words, energy consumption of a signal transmitted on a link of the wake-up receiver is lower than energy consumption of the main radio for receiving a signal transmitted on a main link. For example, the wake-up receiver is a receiver whose local oscillator has low precision. For another example, the wake-up receiver is a receiver that uses envelope detection. For another example, the wake-up receiver is a receiver that does not need to perform fast Fourier transform or inverse fast Fourier transform. These manners help implement low power consumption of the wake-up receiver.

Because the power consumption of the main radio is high, after receiving a wake-up signal, the wake-up receiver may trigger the main radio to wake up. If the wake-up receiver does not trigger the main radio (or a main circuit) to wake up, the main radio is in a disabled state or a deep sleep state, as shown in (b) in FIG. 2. The main radio may be configured to send and receive data. The main radio is a receiver that can receive a synchronization signal block (synchronization signal block, SSB), a physical downlink control channel (physical downlink control channel PDCCH), a physical downlink shared channel (physical downlink shared channel, PDSCH), or a channel state information-reference signal (channel state reference signal, CSI-RS). For another example, the main radio is a receiver that can receive a signal modulated by using binary phase shift keying (binary phase shift keying, BPSK), quadrature phase shift keying (quadrature phase shift keying, QPSK), 16 quadrature amplitude modulation (quadrature amplitude modulation, QAM), 64QAM, or 256QAM.

### 3. Wake-up signal

In this application, a signal monitored by the wake-up receiver is referred to as the "wake-up signal", or may be understood as a "signal transmitted on a wake-up link", a "WUR signal", or the like. The "wake-up signal" may be understood as a signal for waking up a device, or a part of modules or a part of links in the device.

For example, the WUR signal may be a signal modulated by using on-off keying (on-off key, OOK) or frequency shift keying (frequency shift keying, FSK), may be a signal on which fast Fourier transform (fast Fourier transform, FFT) or inverse fast Fourier transform (inverse fast fourier transform, IFFT) is not performed in a generation or decoding process, or may be a Manchester coding signal.

When the OOK is used for modulation, each bit may correspond to one symbol, and each bit may also be referred to as a chip (chip). For example, the bit may be a coded bit. For a bit, when a bit value of the bit is 1, a signal is sent in a symbol corresponding to the bit (in other words, a signal power in the symbol is not 0); or when a bit value of the bit is 0, no signal is sent in a symbol corresponding to the bit (in other words, a signal power in the symbol is 0). It should be understood that reversely, when a bit value of the bit is 0, a signal is sent in the symbol length (in other words, a signal power in the symbol is not 0); or when a bit value of the bit is not 1, no signal is sent in the symbol (in other words, a signal power in the symbol is 0). This is not limited in this application.

For a terminal, the wake-up signal may include one or more of an identifier of the terminal, a group identifier of the terminal, a specific identifier, and a synchronization signal (or referred to as a "low-power-consumption synchronization signal").

The identifier, the group identifier, or the specific identifier of the terminal may be used by the terminal to determine whether a network device pages the terminal, to determine whether a main radio needs to be triggered to wake up.

The specific identifier may be an identifier for waking up all terminals. For example, the specific identifier may be earthquake warning information, tsunami warning information, or system message change information. Optionally, the specific identifier may be configured by a higher layer or predefined in a protocol.

The synchronization signal may be used by the terminal to perform time synchronization with the network device based on the low-power-consumption synchronization signal of the wake-up signal. Alternatively, the terminal may measure signal quality of the low-power-consumption synchronization signal, to determine quality of a signal on a link of a current WUR or quality of a signal in a cell.

In this application, a link for transmitting the wake-up signal is referred to as a "link of a WUR".

### 4. Camped cell

The camped cell may be understood as a "serving cell". In this application, the camped cell may be a cell that sends a radio resource control release message or a system message to a terminal, or a last serving cell of the terminal. The camped cell may alternatively be a cell selected when a terminal needs to perform random access, may be a cell in which the terminal obtains latest system information, or may be a cell in which the terminal enters a wake-up signal receiving state from a connected state (or an idle state or an inactive state). The wake-up signal receiving state herein may be understood as a state in which a main radio is disabled and/or a wake-up receiver is enabled. Alternatively, the "camped cell" may alternatively be described as the "serving cell".

### 5. Tracking area (tracking area) and radio access network-based notification area (RAN-based notification area)

The tracking area (tracking area) may be understood as that when a terminal is in an idle (IDLE) state, paging received by the terminal is core network paging (CN paging), and a network side (namely, a core network device) sends a paging message to the terminal through each access network device in a tracking area in which the terminal is located. The access network device broadcasts, in system information, a tracking area in which the access network device is currently located. When moving to a new cell in the idle state, the terminal receives system information of the new cell, and determines, by reading tracking area code (tracking area code) in the system information, whether the terminal is still in a previous tracking area. If the terminal finds that the terminal has entered a new tracking area, the terminal initiates a mobility registration update (mobility registration update) process, to notify a core network of related information of the new tracking area in which the terminal is located.

The radio access network-based notification area (RAN-based notification area) may be understood as that when a terminal is in an active (INACTIVE) state, paging received by the terminal is access network paging (RAN paging), and an access network side (specifically, an access network device corresponding to a last serving cell (last serving cell) of the terminal) notifies, of sending a paging message to the terminal, each access network device in the radio access network-based notification area in which the terminal is located. For example, each access network device broadcasts, in system information, a RAN area in which the access network device is currently located. When moving to a new cell in the idle state, the terminal receives system information of the new cell, and the terminal determines, by reading access network-area code (RAN-area code) in the system information, whether the terminal is still in a previous radio access network-based notification area. If the terminal finds that the terminal has entered a new radio access network-based notification area, the terminal initiates an access network-based area update (RAN-based notification area update) process to notify an access network side of related information of the new radio access network-based notification area in which the terminal is located.

Generally, that a range of the tracking area is larger than that of the radio access network-based notification area may be understood as that an access network device corresponding to one radio access network-based notification area is a subset of access network devices corresponding to one tracking area.

Generally, one network device (for example, a base station) may correspond to one or more cells. For example, a coverage area centered on the network device may be understood as a "cell". In this application, the network device may provide a service for a first cell or a camped cell.

### 6. Resource

Data or information may be carried by using a resource. In this application, the "resource" may be a frequency domain resource and/or a time domain resource. Resource information may be time domain resource information, frequency domain resource information, or video resource information.

In time domain, the resource may include one or more time units. One time unit may be one symbol, one mini-slot (mini-slot), one slot (slot), or one subframe (subframe). Duration of one subframe in time domain may be one millisecond (ms). One slot includes seven or 14 symbols. One mini-slot may include at least one symbol (for example, two symbols, four symbols, seven symbols, or any quantity of symbols fewer than or equal to 14 symbols). In frequency domain, the resource may include one or more resource blocks (resource blocks, RBs), a physical resource block (physical resource block, PRB), and the like. For example, the "resource information" may be time-frequency resource information.

Currently, a terminal may wake up once in each discontinuous reception (discontinuous reception, DRX) cycle. To be specific, regardless of whether there is data transmission for the terminal, the terminal needs to wake up once in each DRX cycle. To further reduce power consumption of the terminal, the terminal may wake up when there is data transmission. The mechanism may be implemented through two receivers. For example, one is a main radio of the terminal, and the other is a wake-up receiver of the terminal. When the main radio is enabled, the main radio may be configured to send and receive data, to further save energy of the terminal. In a moving process, the terminal needs to measure signal quality of a camped cell and/or signal quality of another cell. According to the foregoing mechanism, it is assumed that in the moving process of the terminal, the main radio is disabled. In this case, how to measure the signal quality of the camped cell and/or the signal quality of the another cell based on an actual requirement becomes a technical problem that needs to be resolved.

In view of this, this application provides a communication method and apparatus. A terminal may obtain configuration information of a wake-up signal of a camped cell and configuration information of a wake-up signal of another cell from a network device, to receive the wake-up signal of the camped cell and/or the wake-up signal of the another cell based on a signal measurement requirement of the terminal. In this way, power consumption of the terminal is reduced, and the camped cell and/or a neighboring cell are/is measured. This can avoid a case that a main radio wakes up to measure cell quality, to reduce energy consumption of the terminal.

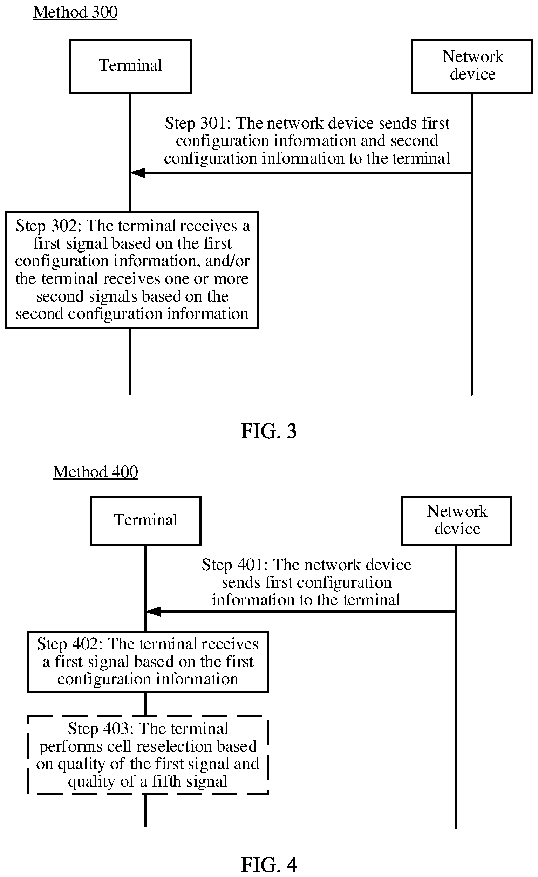

FIG. 3 is a schematic flowchart of a communication method 300 according to this application. The following describes steps shown in FIG. 3. The method 300 includes the following steps.

Step 301: A network device sends first configuration information and second configuration information to a terminal. Correspondingly, the terminal receives the first configuration information and the second configuration information.

The network device sends the first configuration information and the second configuration information to the terminal in a plurality of manners. For example, the network device may send the first configuration information and the second configuration information to the terminal by using a system message. For example, the network device may send the first configuration information and the second configuration information to the terminal by using radio resource control release information. For example, the network device may send the first configuration information to the terminal by using a system message, and send the second configuration information to the terminal by using radio resource control release information. For example, the network device may send the first configuration information to the terminal by using radio resource control release information, and send the second configuration information to the terminal by using a system message. This is not limited. Optionally, the system message in this application may be an on-demand system message.

Specifically, the first configuration information includes resource information of a first signal of a first cell, the second configuration information includes resource information of M second signals of M second cells, the first signal and the second signal are signals transmitted on a link of a wake-up receiver WUR, the first cell is a camped cell of the terminal, and the second cell is different from the first cell.

For the first cell and the M second cells, the M "second cells" may be understood as a cell other than the first cell, and M is an integer greater than or equal to 1. When M is greater than 1, there are a plurality of second cells.

Optionally, the first cell is the camped cell, or is referred to as a current camped cell. For example, the M second cells may include a neighboring cell of the first cell. For another example, the M second cells may include a neighboring cell of the first cell and a neighboring cell of the neighboring cell of the first cell. For still another example, the M second cells may be all or a part of cells in a same tracking area, or the M second cells may be all or a part of cells in a radio access network-based notification area. For ease of description, the neighboring cell of the first cell is referred to as a third cell below, and a neighboring cell of the third cell is referred to as a fourth cell below, where the neighboring cell of the third cell is the neighboring cell of the neighboring cell of the first cell.

In an optional manner, the terminal device includes a first receiver and a second receiver, and energy consumption of the first receiver is less than energy consumption of the second receiver. For example, the first receiver is a wake-up receiver, and the second receiver is a main radio.

The terminal device may alternatively receive the first configuration information and the second configuration information in the following optional manners. For example, the wake-up receiver (an example of the first receiver) of the terminal receives the first configuration information and the second configuration information. For another example, the main radio (an example of the second receiver) of the terminal receives the first configuration information and the second configuration information. For still another example, the wake-up receiver of the terminal receives the first configuration information, and the main radio of the terminal receives the second configuration information. For yet another example, the main radio of the terminal receives the first configuration information, and the wake-up receiver of the terminal receives the second configuration information. A specific implementation of receiving configuration information by the terminal is not limited in this application.

In this application, the M second signals of the M second cells may be understood as that there is a wake-up signal in each second cell, in other words, each second cell has a corresponding wake-up signal. Specifically, the wake-up signal corresponding to each second cell may include one or more of a synchronization signal, an identifier of the terminal, a group identifier of the terminal, and the like.

In this application, a signal of a cell, a signal in a cell, or a signal corresponding to a cell may be understood as that the signal belongs to the cell, the signal is sent by the cell, the signal is sent by a network device corresponding to the cell, or the signal is sent by a network device that provides a service for the cell.

In an example, the first configuration information (or the second configuration information) may include a time-frequency resource location monitored by the wake-up receiver, a frame format of a monitoring frame, a synchronization signal format, and the like. A time domain resource location may include one or more of a monitoring periodicity, an offset between a location of the monitoring frame and a start location of the monitoring periodicity, and a location that is of a monitoring occasion and that is in the monitoring frame. A frequency domain resource location may include one or more of a location of a point A and a frequency domain offset relative to the point A, an SSB and a corresponding frequency domain offset, and a location of a control-resource set 0 (control-resource set 0, CORESET 0) and a corresponding frequency domain offset. Optionally, the first configuration information (or the second configuration information) may further include a power of the wake-up signal or a power offset relative to a reference signal, so that the terminal measures the wake-up signal. For example, the reference signal may be the SSB or a CSI-RS.

The "point A" is a common reference point in a resource block grid. A "resource block" in this application may be understood as a resource block that is in the cell or in a carrier belonging to the cell and that is configured by the network device for the terminal (for example, a resource block in the first cell; and for another example, a resource block in the second cell).

It should be understood that one cell may include frequency domain locations of a plurality of wake-up signals. For example, the frequency domain locations of the plurality of wake-up signals may be adjacent to each other, for facilitating monitoring by the terminal.

In this application, a manner of sending the first configuration information and the second configuration information is not limited. For example, the network device may simultaneously send the first configuration information and the second configuration information by using one piece of signaling. For another example, the network device may separately send the first configuration information and the second configuration information by using different signaling. Specifically, the following implementations may be included.

### Manner (1)

Before step 301, optionally, step 300 is further included: The terminal reports capability information of the wake-up receiver and/or capability information of the main radio to the network device. Correspondingly, the network device receives the capability information of the wake-up receiver and/or the capability information of the main radio.

The capability information of the wake-up receiver includes signal receiving sensitivity information of the wake-up receiver and/or level identification information of the wake-up receiver. The capability information of the main radio includes signal receiving sensitivity information of the main radio and/or level identification information of the main radio.

The signal receiving sensitivity information of the wake-up receiver may be, for example, information about maximum sensitivity degradation (maximum sensitivity degradation, MSD) performance of the wake-up receiver. The level identification information of the wake-up receiver may be, for example, sensitivity level indication information of the wake-up receiver, receiving capability level indication information of the wake-up receiver, or power consumption level identification information of the wake-up receiver.

Optionally, Manner (1) further includes the following step: The network device determines, based on the capability information of the wake-up receiver and/or the capability information of the main radio, to send the first configuration information and the second configuration information to the terminal.

Optionally, the network device may further determine, based on the capability information of the wake-up receiver and/or the capability information of the main radio (for example, the level identification information of the wake-up receiver), that a capability of the wake-up receiver is the same as or basically the same as a capability of the main radio.

It should be understood that in this application, the capability of the wake-up receiver may be understood as a factory configuration capability of the wake-up receiver, or may be understood as a signal processing capability of the wake-up receiver. In this application, the network device (or the terminal) may flexibly determine the capability of the wake-up receiver, and adjust sent (or received) configuration information, to better ensure data transmission performance.

In this application, that "the capability of the wake-up receiver is the same as or basically the same as a capability of the main radio" may be understood as that at a location, a comparison between a signal strength of a wake-up signal received by the wake-up receiver and a signal strength of a signal received by the main radio does not exceed a threshold. That "the capability of the wake-up receiver is the same as or basically the same as a capability of the main radio" may alternatively be understood as that at any location of a cell, a comparison between a signal strength of a wake-up signal received by the wake-up receiver and a signal strength of a signal received by the main radio does not exceed a threshold.

The "comparison" herein may mean that a mathematical operation is first performed on the two signal strengths, and an obtained difference is not greater than a threshold. For example, a division operation or a subtraction operation is performed on the two signal strengths, and then a result is compared with a threshold. For example, the signal strength of the signal received by the main radio is H1, the signal strength of the wake-up signal received by the wake-up receiver is H2, and the threshold is K. When H1-H2≤K, the capability of the wake-up receiver is the same as or basically the same as the capability of the main radio; or when H1/H2≤K, the capability of the wake-up receiver is the same as or basically the same as the capability of the main radio.

That "the capability of the wake-up receiver is the same as or basically the same as a capability of the main radio" may alternatively be understood as that a range of the signal that can be received by the wake-up receiver is the same as or basically the same as a range of the signal that can be received by the main radio. It may alternatively be understood as that a coverage area of the signal received by the wake-up receiver is the same as or basically the same as a coverage area of the signal received by the main radio, the coverage area of the signal received by the wake-up receiver meets a requirement, and the capability of the wake-up receiver meets a requirement. For example, the main radio can receive a signal of a cell at any place in the cell, and the wake-up receiver can also successfully receive a wake-up signal of the cell at any place in the cell. For another example, the main radio can successfully receive a signal of a cell at a cell edge, and the wake-up receiver can also successfully receive a wake-up signal of the cell at the cell edge. For still another example, even at the cell edge, a signal strength of a wake-up signal that is of the cell and that is received by the wake-up receiver is still greater than or equal to a threshold.

### Manner (2)

Optionally, a specific implementation of step 301 may be that the network device first sends the first configuration information to the terminal, and correspondingly, the terminal receives the first configuration information. The terminal receives the first signal based on the first configuration information.

In a possible implementation, the terminal determines that signal quality of the first signal is greater than or equal to a second threshold. For example, the terminal may compare the signal quality of the first signal with signal quality that is measured by the main radio or measured by the main radio and that is multiplied by a parameter. If the terminal determines, through the comparison, that the signal quality of the first signal is greater than or equal to the second threshold, the terminal determines that a signal receiving capability of the wake-up receiver is the same as or basically the same as a signal receiving capability of the main radio. In this case, the terminal may send first information to the network device, where the first information is used to request the second configuration information. After receiving the first information, the network device sends the second configuration information to the terminal. To be specific, in this implementation, the terminal may determine, based on the signal quality of the first signal, whether to request the second configuration information.

In another possible implementation, the terminal reports the signal quality of the first signal to the network device. That the network device determines that the signal quality of the first signal is greater than or equal to the second threshold may alternatively be understood as that the network device determines that the signal receiving capability of the wake-up receiver is the same or basically the same as the signal receiving capability of the main radio. In this case, the network device sends the second configuration information to the terminal. To be specific, in this implementation, the network device may determine, based on the signal quality of the first signal, whether to send the second configuration information to the terminal.

Step 302: The terminal receives the first signal based on the first configuration information, and/or the terminal receives one or more second signals based on the second configuration information.

Optionally, the first signal in this application may be a wake-up signal. Optionally, the second signal in this application may be a wake-up signal.

In this application, "the terminal receives the first signal based on the first configuration information" in the following specific implementations.

In a possible implementation, if the main radio of the terminal receives the first configuration information, the main radio may control, based on the first configuration information, the wake-up receiver to receive the first signal.

In another possible implementation, if the main radio of the terminal receives the first configuration information, the main radio may send the first configuration information to the wake-up receiver. It should be understood that behavior that the main radio of the terminal sends information to the wake-up receiver may be understood as "transfer of information inside the terminal". The wake-up receiver receives the first signal based on the first configuration information. In a possible implementation, if the main radio of the terminal receives the first configuration information or the wake-up receiver receives the first configuration information, the main radio or the wake-up receiver may send the first configuration information to a controller of the terminal, and the controller of the terminal may control, based on the first configuration information, the wake-up receiver to receive the first signal.

In another possible implementation, if the wake-up receiver of the terminal receives the first configuration information, the wake-up receiver may receive the first signal based on the first configuration information.

Similarly, when "the terminal receives one or more of the M second signals based on the second configuration information", for a specific execution body inside the terminal, refer to the foregoing several implementations in which the terminal receives the first configuration information. For example, if the main radio of the terminal receives the second configuration information, the main radio may control, based on the second configuration information, the wake-up receiver to receive one or more of the M second signals.

It should be noted that it is unnecessary that the terminal receives one or more of the M second signals based on the second configuration information. In an example, that the terminal moves in the camped cell, and the quality that is of the first signal and that is obtained by the terminal by receiving the first signal is greater than or equal to a first threshold may alternatively be understood as that signal quality that is of the terminal and that is in the first cell is good. In this case, the terminal may be located at or near a cell center. In this case, the terminal does not require cell handover, in other words, the terminal does not need to perform cell reselection. In this case, the terminal may not receive a signal of the neighboring cell of the first cell. In other words, the neighboring cell of the first cell does not need to be measured. The terminal may need to receive the first signal based on the first configuration information but not receive the M second signals.

Specifically, the terminal receives one or more of the M second signals based on the second configuration information in the following implementations.

### Manner (a)

When the signal quality of the first signal is less than or equal to the first threshold, the terminal receives the one or more of the M second signals based on the second configuration information. Specifically, it is assumed that the terminal is located at the cell edge or moves to the cell edge, and the quality that is of the first signal and that is obtained by the terminal by receiving the first signal is less than or equal to the first threshold. In this case, the terminal may further receive one or more of the M second signals based on the second configuration information. It may alternatively be understood as that the signal quality that is of the terminal and that is in the first cell is poor, and in this case, the terminal does not require the cell handover or the cell reselection, and the terminal receives the second signal based on the second configuration information. In other words, in this case, the terminal may simultaneously receive a wake-up signal of the first cell and a wake-up signal of the second cell.

### Manner (b)

When the terminal receives no first signal based on the first configuration information within first duration, the terminal receives the one or more of the M second signals based on the second configuration information. Specifically, for example, a signal transmitted on the link of the WUR is weak, and the terminal cannot receive the wake-up signal, or the terminal incorrectly decodes the received wake-up signal. In this case, the terminal may further receive one or more of the M second signals based on the second configuration information. It may alternatively be understood as that the signal quality that is of the terminal and that is in the first cell is poor, and in this case, the terminal does not need to keep waiting for receiving the first signal, and the terminal may receive the second signal based on the second configuration information. In other words, in this case, the terminal may simultaneously receive a wake-up signal of the first cell and a wake-up signal of the second cell.

Therefore, the terminal alternatively receives one or more of the M second signals based on the second configuration information in the following implementations.

### Manner (c)

If the M second cells include the neighboring cell of the first cell, the terminal may receive a wake-up signal of the first cell based on the first configuration information, and the terminal receives a wake-up signal (denoted as a "third signal") of the neighboring cell of the first cell based on the second configuration information.

### Manner (d)

If the M second cells include the neighboring cell of the first cell and the neighboring cell of the neighboring cell of the first cell, the terminal may receive a wake-up signal of the first cell based on the first configuration information, and the terminal still receives only a wake-up signal of the neighboring cell of the first cell based on the second configuration information, in other words, does not need to receive a wake-up signal (denoted as a "fourth signal") of the neighboring cell of the neighboring cell of the first cell.

In other words, Manner (c) and Manner (d) may alternatively be understood as that when receiving the wake-up signal of the second cell, the terminal may receive only the wake-up signal of the neighboring cell of the first cell, and the terminal may not need to receive a wake-up signal of another neighboring cell that is not of the first cell. It may alternatively be understood as that the network device configures related configuration information of wake-up signals of a plurality of cells for the terminal. When actually receiving a wake-up signal, the terminal may not need to receive the wake-up signals of all the cells, so that power consumption of the terminal can be reduced.

Further, the terminal may perform cell reselection (the "cell reselection" may alternatively be understood as the "cell handover") based on the quality of the first signal and quality of the third signal. For example, when the quality of the third signal is greater than the quality of the first signal, the terminal determines that the neighboring cell of the first cell is a reselected cell. For another example, when the quality of the third signal is greater than a threshold and the quality of the first signal is less than another threshold, the terminal determines that the neighboring cell of the first cell is a reselected cell. After completing the cell reselection, the terminal may receive the third signal based on the second configuration information, and/or receive the fourth signal based on the second configuration information. In other words, after completing the cell reselection, the terminal may continue to monitor a wake-up signal of the reselected cell and/or a wake-up signal of a neighboring cell of the reselected cell.

Optionally, in this application, the "first configuration information" and/or the "second configuration information" may further include a relationship between at least one second cell and the first cell. For example, a specific second cell in the at least one second cell and the first cell are neighboring cells. Optionally, the "first configuration information" and/or the "second configuration information" may further include a relationship between cells. For example, each of the at least one second cell and a specific second cell are neighboring cells; and for another example, a specific second cell and the first cell are neighboring cells. Specifically, for example, the network device may group a plurality of cells. For example, a first group includes a cell #1 and a neighboring cell of the cell #1, and it is assumed that neighboring cells of the cell #1 include a cell #2, a cell #3, a cell #4, and a cell #5. For example, a second group includes the cell #2 and a neighboring cell of the cell #2, and it is assumed that neighboring cells of the cell #2 include the cell #1, a cell #6, a cell #7, and a cell #8; and the like. The network device may send group information to the terminal. In a possible implementation, the second configuration information may include group information of a cell, and the group information indicates a neighboring cell of the cell to the terminal.

Optionally, the second configuration information may further include information about whether the second cell supports sending of the WUR signal.

Optionally, whether the second configuration information includes WUR signal configuration information (for example, a WUR signal time-frequency resource parameter) of the second cell may implicitly indicate whether the second cell supports sending of the WUR signal.

For example, the "first threshold" and the "second threshold" in this application may be configured by the network device, the "first threshold" and the "second threshold" are predefined in a protocol, or the "first threshold" and the "second threshold" are related to the signal quality measured by the main radio of the terminal.

For example, the "first duration" in this application may be configured by the network device, or the first duration is predefined in a protocol. This is not limited.

In this application, the "first duration" may be understood as, for example, a period of time. For another example, the "first duration" may be a time unit. For example, the "time unit" may be one or more radio frames, one or more subframes, one or more slots, one or more mini-slots, one or more symbols, or the like. The symbol may be an orthogonal frequency division multiplexing (orthogonal frequency division multiplexing, OFDM) symbol, a discrete Fourier transform spread spectrum orthogonal frequency division multiplexing (discrete fourier transform spread spectrum orthogonal frequency division multiplexing, DFT-S-OFDM) symbol, or the like. For example, first time may alternatively be one second (second, "s" for short) or a plurality of seconds, or one millisecond (millisecond, "ms" for short) or a plurality of milliseconds.

It should be noted that the "first threshold", the "second threshold", or the "first duration" in this application may be obtained by performing a mathematical operation on a plurality of parameters, for example, may be a "sum" obtained by performing the mathematical operation on the plurality of parameters.

For example, in a possible implementation, a scenario of the method 300 may be as follows: In a moving process of the terminal, the network device does not page the terminal, or it may be understood as that there is no data transmission between the terminal and the network device, and the main radio is disabled. Further, the scenario may be as follows: The terminal or the network device determines that the capability of the wake-up receiver of the terminal is basically the same as the capability of the main radio, and the main radio does not need to wake up to receive a signal of the second cell.

Based on the foregoing technical solution, in this embodiment, the terminal may first obtain (for example, obtain before the main radio is disabled) the first configuration information and the second configuration information, so that in the moving process, the terminal can measure signal quality of the camped cell and/or signal quality of the neighboring cell based on an actual requirement. In this way, power consumption of the terminal is reduced, and the camped cell and/or the neighboring cell are/is measured.

FIG. 4 shows another communication method 400 according to this application. It should be noted that a step represented by dashed lines in FIG. 4 is optional, and details are not described below. For a part of descriptions of the technical solution of the method 400, refer to the method 300 for understanding. Differences between the method 400 and the method 300 are mainly described herein. The method includes the following steps.

Step 401: A network device sends first configuration information to a terminal. Correspondingly, the terminal receives the first configuration information.

For explanations of the "first configuration information", refer to the descriptions in step 301 in the method 300 for understanding.

"The network device sends the first configuration information to the terminal" in the following specific implementations.

### Manner (1)

Before step 401 is performed, optionally, step 400 is further included: The terminal reports capability information of a wake-up receiver and/or capability information of a main radio to the network device. Correspondingly, the network device receives the capability information of the wake-up receiver and/or the capability information of the main radio.

For the capability information of the wake-up receiver and the capability information of the main radio, refer to the descriptions in the method 300 for understanding.

Optionally, Manner (1) further includes the following step: The network device determines, based on the capability information of the wake-up receiver and/or the capability information of the main radio, to send the first configuration information to the terminal. For example, the network device may determine, based on level identification information of the wake-up receiver, that a capability of the wake-up receiver is different from a capability of the main radio.

In this application, that "the capability of the wake-up receiver is different from the capability of the main radio" may be understood as that a comparison between a signal strength of a wake-up signal received by the wake-up receiver and a signal strength of a signal received by the main radio exceeds a threshold. For example, when a difference obtained through the signal strength of the signal received by the main radio minus the signal strength of the wake-up signal received by the wake-up receiver is greater than a threshold, it indicates that the capability of the wake-up receiver is different from the capability of the main radio. For example, regardless of any location in a cell, when the comparison between the signal strength of the wake-up signal received by the wake-up receiver and the signal strength of the signal received by the main radio exceeds the threshold, it indicates that the capability of the wake-up receiver is different from the capability of the main radio.

That "the capability of the wake-up receiver is different from the capability of the main radio" may alternatively be understood as that a range of a signal that can be received by the wake-up receiver is different from a range of a signal that can be received by the main radio. It may alternatively be understood as that a coverage area of the signal received by the wake-up receiver is different from a coverage area of the signal received by the main radio, the coverage area of the signal received by the wake-up receiver does not meet a requirement, the capability of the wake-up receiver does not meet a requirement, a signal receiving capability of the wake-up receiver is weaker than that of the main radio, or a coverage area of the signal received by the wake-up signal receiver is less than that of the main radio. For example, when the wake-up receiver is at an edge of a first cell, the wake-up receiver cannot receive a wake-up signal of the first cell. Optionally, in this case, the wake-up receiver cannot receive a wake-up signal of a second cell. In other words, when moving between cells, the terminal may receive no wake-up signal. If the network device needs to wake up the terminal in this case, the terminal cannot receive a wake-up signal from the network device by using the wake-up receiver. Optionally, in an area (for example, a cell edge) in which the wake-up receiver cannot successfully receive the wake-up signal, the terminal needs the main radio to wake up, and receives a signal on the main radio, to avoid missing a signal sent by the network device.

### Manner (2)

In a possible implementation, that the terminal determines that signal quality of a first signal is less than or equal to a second threshold may alternatively be understood as that the terminal determines that a signal receiving capability of a wake-up receiver is different from a signal receiving capability of a main radio. In comparison with the method 300, in the method 400, the terminal does not request the network device to send second configuration information.

In another possible implementation, the terminal reports signal quality of a first signal to the network device. That the network device determines that the signal quality of the first signal is less than or equal to a second threshold may alternatively be understood as that the network device determines that a signal receiving capability of a wake-up receiver is different from a signal receiving capability of a main radio. In this case, the network device does not send the second configuration information to the terminal.

In still another possible implementation, the network device indicates to the terminal that the terminal does not need to receive the second configuration information or ignores the second configuration information. Alternatively, when requesting the network device to send configuration information (for example, the first configuration information) of a wake-up signal, the terminal does not request the second configuration information. Alternatively, the terminal obtains the first configuration information and the second configuration information, but the terminal may ignore the second configuration information.

Alternatively, in this embodiment, even if the network device sends the second configuration information to the terminal, the terminal does not receive a second signal based on the second configuration information. In other words, in the method 400, the terminal ignores configuration information of a wake-up signal of a non-camped cell.

For a specific manner of carrying the first configuration information and the second configuration information, refer to the descriptions in step 301 in the method 300 for understanding.

Step 402: The terminal receives the first signal based on the first configuration information.

In this embodiment, for the descriptions that "the terminal receives the first signal based on the first configuration information", refer to step 302 in the method 300 for understanding. Further, the terminal may subsequently have the following implementations.

### Manner (a)

In a possible implementation, when the signal quality of the first signal is less than or equal to a third threshold, the main radio of the terminal wakes up, and the main radio receives a fifth signal, where the fifth signal is a signal in the second cell.

In this application, for example, the fifth signal may be an SSB, a channel state information-reference signal (channel state information-reference signal, CSI-RS), or the like that is in the second cell and that is received by the main radio.

In an example, the main radio of the terminal receives the first configuration information, and controls the wake-up receiver to receive the first signal. The wake-up receiver may measure the quality of the first signal based on the received first signal (for example, a low-power-consumption synchronization signal). If the quality of the first signal is less than or equal to the third threshold, the terminal determines that a signal transmitted on a link of the WUR is weak (for example, the terminal may move to the edge of the first cell; and for another example, the capability of the wake-up receiver is poor, and the wake-up signal cannot be received currently). In this case, the wake-up receiver may trigger the main radio to wake up, and the main radio receives a signal of the second cell.

### Manner (b)

In another possible implementation, the main radio of the terminal wakes up based on a first periodicity, and the main radio receives a fifth signal. For example, the first periodicity may be a wake-up periodicity of the main radio.

In an example, the network device configures the wake-up periodicity of the main radio (the "wake-up periodicity of the main radio" may alternatively be understood as an "autonomous wake-up periodicity of the main radio") for the terminal. For example, the main radio wakes up once every 10 seconds. For another example, the main radio wakes up once every slot. The main radio periodically wakes up based on a configured first periodicity. After waking up, the main radio receives a signal of the second cell.

For example, the "first periodicity" in this embodiment may be configured by the network device, or the "first periodicity" is predefined in a protocol. This is not limited.

### Manner (c)

In still another possible implementation, the main radio wakes up based on a moment at which the first signal is received for the last time and second duration, and the main radio receives a fifth signal.

In an example, the wake-up receiver may receive the first signal based on the first configuration information. It is assumed that the wake-up receiver receives the first signal every three seconds. For example, after receiving the first signal for the fifth time, the wake-up receiver receives no first signal again. For example, after receiving the first signal for the fifth time, the terminal receives no first signal again within 20 seconds (an example of the second duration). For another example, after receiving the first signal for the first time, the terminal receives no first signal again within 30 seconds (an example of the second duration). In this case, the terminal determines that quality of a signal transmitted on a link of the WUR is poor, and the wake-up receiver cannot receive the wake-up signal. In this case, the wake-up receiver may trigger the main radio to wake up, or the main radio actively wakes up, and the main radio receives a signal of the second cell.

In this embodiment, after waking up, the main radio can also receive an SSB, a CSI-RS, or the like in the first cell, to perform signal measurement. This is not limited.

For example, the "second duration" in this embodiment may be configured by the network device, or the "second duration" is predefined in a protocol. This is not limited.

Optionally, if a neighboring cell of the first cell has a band that is not supported by the wake-up receiver but is supported by the main radio, the main radio also needs to wake up. In this case, when the quality of the first signal and/or quality of the second signal are/is less than a specific threshold, the terminal may trigger the main radio to wake up, or the main radio actively wakes up. When performing measurement, the main radio only needs to measure signal quality of a neighboring cell that is not supported by the wake-up receiver, to reduce non-sleep duration of the main radio, and reduce power consumption of the terminal. Optionally, that the main radio actively wakes up herein may also be combined with the foregoing examples of the "first periodicity" and the "second duration".

Optionally, if the "first configuration information" of the terminal does not include group information related to the second cell, for example, the first configuration information does not include group information of the neighboring cell of the first cell, in other words, the terminal cannot learn of a specific neighboring cell corresponding to the neighboring cell of the first cell, the wake-up receiver also needs to trigger the main radio to wake up, or the main radio actively wakes up.

Optionally, step 403 is further included: The terminal performs cell reselection based on the signal quality of the first signal and signal quality of the fifth signal.

For example, if the wake-up receiver determines that the signal quality of the first signal is less than or equal to a fourth threshold, and the main radio determines that the signal quality of the fifth signal is greater than or equal to a fifth threshold, the terminal performs cell reselection. For example, the terminal performs reselection from the first cell to the neighboring cell (an example of the second cell) of the first cell.

For another example, if the wake-up receiver receives the first signal, the main radio receives the fifth signal, the wake-up receiver sends the signal quality of the first signal to the main radio, the main radio determines that the signal quality of the first signal is less than or equal to a fourth threshold, and the signal quality of the fifth signal is greater than or equal to a fifth threshold, the terminal performs cell reselection. For example, the terminal performs reselection from the first cell to the neighboring cell of the first cell.

For example, the "third threshold", the "fourth threshold", and the "fifth threshold" in this embodiment may be configured by the network device, the "third threshold", the "fourth threshold", and the "fifth threshold" are predefined in a protocol, or the "third threshold", the "fourth threshold", and the "fifth threshold" are related to signal quality measured by the main radio. This is not limited.

For example, in a possible implementation, a scenario of the method 400 may be as follows: In a moving process of the terminal, the network device pages the terminal, or it may be understood as that there is data transmission between the terminal and the network device, and the main radio wakes up. For another example, a scenario of the method 400 may be as follows: The terminal or the network device determines that the capability of the wake-up receiver of the terminal is different from the capability of the main radio, in other words, in a moving process of the terminal, the main radio needs to wake up.

Based on the foregoing technical solution, in this embodiment, the terminal can receive the first configuration information, and determine, in various manners, that the main radio needs to wake up, so that in the moving process, the terminal can measure signal quality of a camped cell and/or the signal quality of the neighboring cell based on an actual requirement, to measure the camped cell and/or the neighboring cell.

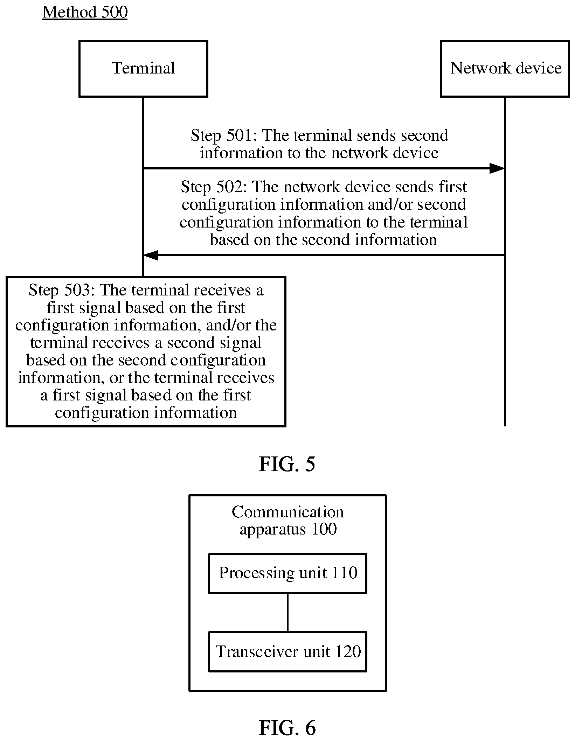

FIG. 5 shows another communication method 500 according to this application. For partial descriptions of a technical solution of the method 500, refer to the method 300 and the method 400 for understanding. Differences between the method 500 and the method 300 and between the method 500 and the method 400 are mainly described herein.

Step 501: A terminal reports second information to a network device, where the second information indicates at least a capability of a wake-up receiver. Correspondingly, the network device receives the second information from the terminal.

In a possible implementation, the terminal reports the second information to the network device, where the second information may be capability information of the wake-up receiver and/or capability information of a main radio. For specific explanations of "the capability information of the wake-up receiver and/or the capability information of the main radio", refer to the descriptions in the method 300 for understanding.

In another possible implementation, the second information may be quality of a first signal. In this implementation, the terminal may first obtain first configuration information, and receive the first signal based on first information, to obtain the quality of the first signal. Optionally, the terminal may also determine, based on the quality of the first signal, whether to request second configuration information. For example, if the quality of the first signal is less than or equal to a second threshold, the terminal does not request the second configuration information from the network device.

Step 502: The network device sends the first configuration information and/or the second configuration information to the terminal based on the second information. Correspondingly, the terminal receives the first configuration information and/or the second configuration information.

It may alternatively be understood as that the network device determines, based on the second information of the terminal, whether a capability of the wake-up receiver is the same as a capability of the main radio.

### Scenario (1)

In a possible implementation, the network device may determine, based on sensitivity information of the wake-up receiver, that the capability of the wake-up receiver is the same as the capability of the main radio. In this case, the network device may send the first configuration information and the second configuration information to the terminal. For details, refer to the descriptions in step 301 in the method 300.

In another possible implementation, the network device determines, based on the quality of the first signal and the second threshold, that the capability of the wake-up receiver is the same as the capability of the main radio. For example, if the quality of the first signal is greater than or equal to the second threshold, it is determined that the capability of the wake-up receiver is the same as the capability of the main radio. In this case, the network device may send the first configuration information and the second configuration information to the terminal. For details, refer to the descriptions in step 301 in the method 300.

### Scenario (2)

In a possible implementation, the network device may determine, based on sensitivity information of the wake-up receiver, that the capability of the wake-up receiver is different from the capability of the main radio. In this case, the network device may send the first configuration information to the terminal. For details, refer to the descriptions in step 401 in the method 400 for understanding. Alternatively, the network device sends the first configuration information and the second configuration information to the terminal, but indicates to the terminal that the terminal does not need to receive the second configuration information.

In another possible implementation, the network device determines, based on the quality of the first signal and the second threshold, that the capability of the wake-up receiver is different from the capability of the main radio. For example, if the quality of the first signal is less than or equal to the second threshold, it is determined that the capability of the wake-up receiver is different from the capability of the main radio. In this case, the network device may send only the first configuration information to the terminal. For details, refer to the descriptions in step 401 in the method 400 for understanding. Alternatively, the network device sends the first configuration information and the second configuration information to the terminal, but indicates to the terminal that the terminal does not need to receive the second configuration information.

In a possible implementation, if the capability of the wake-up receiver is the same as or basically the same as the capability of the main radio, step 503 is: The terminal receives the first signal based on the first configuration information, and/or the terminal receives one or more second signals based on the second configuration information. For details, refer to the descriptions in step 302 in the method 300 for understanding.

In another possible implementation, if the capability of the wake-up receiver is different from the capability of the main radio, step 503 is: The terminal receives the first signal based on the first configuration information. For details, refer to the descriptions in step 402 in the method 400 for understanding.

Based on the foregoing technical solution, in this application, the terminal may indicate, to the network device, whether the capability of the wake-up receiver is the same as the capability of the main radio, so that the network device determines to send the first configuration information and/or the second configuration information. In this way, in a moving process, the terminal can measure signal quality of a camped cell and/or signal quality of a neighboring cell based on an actual requirement. In this way, power consumption of the terminal is reduced, and the camped cell and/or the neighboring cell are/is measured.

It may be understood that examples in the method 300 to the method 500 in embodiments of this application are merely intended to help a person skilled in the art understand embodiments of this application, but are not intended to limit embodiments of this application to specific scenarios shown in the examples. It is clear that a person skilled in the art can make various equivalent modifications or changes based on the examples in the method 300 to the method 500, and such modifications or changes also fall within the scope of embodiments of this application.

It may be further understood that some optional features in embodiments of this application may be independent of another feature in some scenarios, or may be combined with another feature in some scenarios. This is not limited.

It may be further understood that embodiments described in this application may be independent solutions, or may be combined based on internal logic. All these solutions fall within the protection scope of this application. In addition, explanations or descriptions of the terms in embodiments may be mutually referenced or explained in embodiments. This is not limited.

It should be understood that "predefine" in this application can be understood as "define", "define in advance", "store", "pre-store", "pre-negotiate", "preconfigure", "build into", or "pre-burn".

It may be understood that in this application, "when", "if", and "in case of" all mean that an apparatus performs corresponding processing in an objective situation, are not intended to limit time, do not require that the apparatus should have a determining action during implementation, and do not mean that there is another limitation.

It may be understood that the term "and/or" in this specification describes an association relationship between associated objects and represents that three relationships may exist. For example, A and/or B may represent the following cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects.

The foregoing mainly describes the solutions provided in embodiments of this application from a perspective of interaction between nodes. It may be understood that to implement the foregoing functions, each node, for example, a terminal or a network device, includes a corresponding hardware structure and/or software module for performing each function. A person skilled in the art should be able to be aware that in combination with units and algorithm steps of the examples described in embodiments disclosed in this specification, this application may be implemented by using hardware or a combination of the hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

It may be understood that to implement the functions in the foregoing embodiments, the network device and the terminal include corresponding hardware structures and/or software modules for performing each function. A person skilled in the art should be easily aware that in combination with the units and the method steps in the examples described in embodiments disclosed in this application, this application can be implemented by using hardware or a combination of the hardware and computer software. Whether a function is performed by hardware or hardware driven by computer software depends on particular application scenarios and design constraints of the technical solutions.

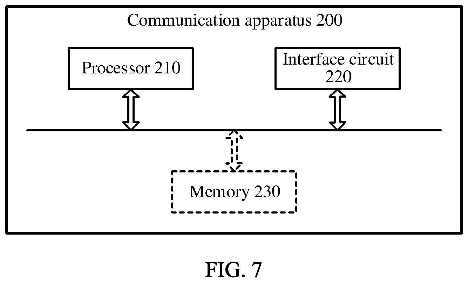

FIG. 6 and FIG. 7 are diagrams of structures of possible communication apparatuses according to embodiments of this application. These communication apparatuses may be configured to implement a function of the terminal or the network device in the foregoing method embodiments. Therefore, the beneficial effects of the foregoing method embodiments can also be implemented. In the embodiments of this application, the communication apparatus may be one of the terminals 120a to 120j shown in FIG. 1, may be the network device 110a or 110b shown in FIG. 1, or may be a module (for example, a chip) used in the terminal or the network device.

As shown in FIG. 6, a communication apparatus 100 includes a processing unit 110 and a transceiver unit 120. The communication apparatus 100 is configured to implement a function of the terminal or the network device in the method embodiments shown in FIG. 3, FIG. 4, and FIG. 5.

When the communication apparatus 100 is configured to implement the function of the terminal in the method embodiment shown in FIG. 3, for example, the transceiver unit 120 may include two transceiver units: a first transceiver unit and a second transceiver unit. The first transceiver unit may correspond to, for example, a transceiver unit of a wake-up receiver, and the second transceiver unit may correspond to, for example, a transceiver unit of a main radio.

Specifically, the transceiver unit 120 is configured to receive first configuration information and second configuration information. The processing unit 110 is configured to control, based on the first configuration information, the first transceiver unit to receive a first signal; and/or the processing unit 110 is configured to control, based on the second configuration information, the first transceiver unit to receive one or more of M second signals, where M is an integer greater than or equal to 1.

In a possible implementation, the processing unit 110 is configured to control, based on the first configuration information, the first receiving unit to receive the first signal. When signal quality of the first signal is less than or equal to a first threshold, the first receiving unit is configured to receive a second signal; or when the second receiving unit receives no first signal within first duration, the processing unit 110 is configured to control, based on the second configuration information, the first receiving unit to receive one or more of the M second signals.

In a possible implementation, the processing unit 110 is configured to control, based on the first configuration information, the first receiving unit to receive the first signal, and the processing unit 110 is configured to control, based on the second configuration information, the first receiving unit to receive a third signal.

In a possible implementation, the processing unit 110 is configured to control, based on the quality of the first signal and quality of the third signal, the apparatus to perform handover from a first cell to a third cell.

In a possible implementation, the processing unit 110 is configured to control, based on the second configuration information, the first receiving unit to receive the third signal; and/or the processing unit 110 is configured to control, based on the second configuration information, the first receiving unit to receive a fourth signal.

In a possible implementation, the second receiving unit is configured to send capability information of a first receiver of the apparatus and/or capability information of a second receiver, where energy consumption of the first receiver is less than energy consumption of the second receiver.

In a possible implementation, the second receiving unit is configured to receive first configuration information. When the signal quality of the first signal is greater than or equal to the first threshold, the second receiving unit is configured to send first information, where the first information is used to request the second configuration information.

In a possible implementation, the second receiving unit is configured to send the signal quality of the first signal.

For more detailed descriptions of the processing unit 110 and the transceiver unit 120, directly refer to the related descriptions in the method embodiment shown in FIG. 3. Details are not described herein again.

When the communication apparatus 100 is configured to implement the function of the terminal in the method embodiment shown in FIG. 4, for example, the transceiver unit 120 may include two transceiver units: a first transceiver unit and a second transceiver unit.

Specifically, the transceiver unit 120 is configured to receive first configuration information, and the processing unit 110 is configured to control, based on the first configuration information, the first receiving unit to receive a first signal.

In a possible implementation, when signal quality of the first signal is less than or equal to a first threshold, the second receiver of the apparatus wakes up, and the second receiving unit is configured to receive a fifth signal.

In a possible implementation, the communication apparatus wakes up based on a first periodicity, and the second receiving unit is configured to receive the fifth signal.

In a possible implementation, the communication apparatus wakes up based on a moment at which the first signal is received for the last time and second duration, and the second receiving unit is configured to receive the fifth signal.

In a possible implementation, the processing unit 110 is configured to control, based on the signal quality of the first signal and signal quality of the fifth signal, the communication apparatus to perform handover from a first cell to a second cell.

In a possible implementation, the second transceiver unit is configured to report capability information of a first receiver of the apparatus and/or capability information of a second receiver of the apparatus.

In a possible implementation, the processing unit 110 is configured to determine that the quality of the first signal is less than or equal to the first threshold; or the second transceiver unit is configured to report the signal quality of the first signal.

For more detailed descriptions of the processing unit 110 and the transceiver unit 120, directly refer to the related descriptions in the method embodiment shown in FIG. 4. Details are not described herein again.

When the communication apparatus 100 is configured to implement the function of the terminal in the method embodiment shown in FIG. 5, for example, the transceiver unit 120 may include two transceiver units: a first transceiver unit and a second transceiver unit.

The transceiver unit 120 is configured to send second information.

In a possible implementation, the transceiver unit 120 is configured to receive first configuration information and second configuration information. The processing unit 110 is configured to control, based on the first configuration information, the first transceiver unit to receive a first signal, and/or the processing unit 110 is configured to control, based on the second configuration information, the first transceiver unit to receive a second signal.

In a possible implementation, the transceiver unit 120 is configured to receive the first configuration information, and the processing unit 110 is configured to control, based on the first configuration information, the first transceiver unit to receive the first signal.

For more detailed descriptions of the processing unit 110 and the transceiver unit 120, directly refer to the related descriptions in the method embodiment shown in FIG. 5. Details are not described herein again.

When the communication apparatus 100 is configured to implement the function of the network device in the method embodiment shown in FIG. 3, the transceiver unit 120 is configured to send first configuration information and second configuration information.

In a possible implementation, the transceiver unit 120 is further configured to receive capability information of a first receiver of a terminal and/or capability information of a second receiver of the terminal, where energy consumption of the first receiver is less than energy consumption of the second receiver. The processing unit 110 is configured to control, based on the capability information of the first receiver and/or the capability information of the second receiver, the transceiver unit 120 to send the first configuration information and the second configuration information.

In a possible implementation, the transceiver unit 110 is configured to send the first configuration information, and the transceiver unit 110 is further configured to receive first information, where the first information is used to request the second configuration information. The processing unit 110 is configured to control, based on the first information, the transceiver unit 120 to send the second configuration information.

In a possible implementation, the transceiver unit 120 is configured to send the first configuration information, and the transceiver unit 120 is further configured to receive signal quality of a first signal. When the signal quality of the first signal is greater than or equal to a first threshold, the transceiver unit 120 is configured to send the second configuration information.

For more detailed descriptions of the processing unit 110 and the transceiver unit 120, directly refer to the related descriptions in the method embodiment shown in FIG. 3. Details are not described herein again.

When the communication apparatus 100 is configured to implement the function of the network device in the method embodiment shown in FIG. 4: The transceiver unit 120 is configured to receive capability information of a first receiver of a terminal and/or capability information of a second receiver of the terminal. The processing unit 110 is configured to control, based on the capability information of the first receiver of the terminal and/or the capability information of the second receiver of the terminal, the transceiver unit 120 to send first configuration information.

For more detailed descriptions of the processing unit 110 and the transceiver unit 120, directly refer to the related descriptions in the method embodiment shown in FIG. 4. Details are not described herein again.

When the communication apparatus 100 is configured to implement the function of the network device in the method embodiment shown in FIG. 5, the transceiver unit 120 is further configured to receive second information.

In a possible implementation, the processing unit 110 is configured to control, based on the second information, the transceiver unit 120 to send first configuration information and second configuration information.

In a possible implementation, the processing unit 110 is configured to control, based on the second information, the transceiver unit 120 to send the first configuration information.

For more detailed descriptions of the processing unit 110 and the transceiver unit 120, directly refer to the related descriptions in the method embodiment shown in FIG. 5. Details are not described herein again.

As shown in FIG. 7, a communication apparatus 200 includes a processor 210 and an interface circuit 220. The processor 210 and the interface circuit 220 are coupled to each other. It may be understood that the interface circuit 220 may be a transceiver or an input/output interface. Optionally, the communication apparatus 200 may further include a memory 230, configured to store instructions executed by the processor 210, store input data required by the processor 210 to run the instructions, or store data generated after the processor 210 runs the instructions.

When the communication apparatus 200 is configured to implement the method shown in FIG. 3, the processor 210 is configured to implement a function of the processing unit 110, and the interface circuit 220 is configured to implement a function of the transceiver unit 120.

When the communication apparatus 200 is configured to implement the method shown in FIG. 4, the processor 210 is configured to implement a function of the processing unit 110, and the interface circuit 220 is configured to implement a function of the transceiver unit 120.

When the communication apparatus 200 is configured to implement the method shown in FIG. 5, the processor 210 is configured to implement a function of the processing unit 110, and the interface circuit 220 is configured to implement a function of the transceiver unit 120.

It should be understood that the processor shown in FIG. 7 may include at least one processor, and the interface circuit may also include a plurality of interface circuits.

For explanations and beneficial effects of related content in any one of the apparatuses provided above, refer to the corresponding method embodiment provided above. Details are not described herein again.

When the communication apparatus is a chip used in a terminal, the chip in the terminal implements a function of the terminal in the foregoing method embodiments. The chip in the terminal receives information from another module (for example, a radio frequency module or an antenna) in the terminal, where the information is sent by a base station to the terminal; or the chip in the terminal sends information to another module (for example, a radio frequency module or an antenna) in the terminal, where the information is sent by the terminal to a base station.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

According to the methods provided in embodiments of this application, this application further provides a computer program product. The computer program product stores computer program code. When the computer program code is run on a computer, the computer is enabled to perform the method performed by the terminal or the network device in any one of the embodiments of the method 300, the method 400, and the method 500.

According to the methods provided in embodiments of this application, this application further provides a computer-readable medium. The computer-readable medium stores program code. When the program code is run on a computer, the computer is enabled to perform the method performed by the terminal or the network device in the foregoing embodiments.

According to the methods provided in embodiments of this application, this application further provides a communication system. The communication system includes a terminal and a network device. The terminal is configured to perform steps corresponding to the terminal in the method 300, the method 400, and the method 500, and the network device is configured to perform steps corresponding to the network device in the method 300, the method 400, and the method 500.

The method steps in embodiments of this application may be implemented in hardware, or may be implemented in software instructions that may be executed by the processor. Software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. The processor and the storage medium may exist in the base station or the terminal as discrete components.

All or a part of the foregoing embodiments may be implemented by using software, hardware, firmware, or any combination thereof. When the software is used to implement embodiments, all or a part of embodiments may be implemented in a form of a computer program product. The computer program product includes one or more computer programs or instructions. When the computer programs or instructions are loaded and executed on a computer, the procedures or the functions in embodiments of this application are all or partially performed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape, may be an optical medium, for example, a digital video disc, or may be a semiconductor medium, for example, a solid-state drive. The computer-readable storage medium may be a volatile or non-volatile storage medium, or may include two types of storage media: the volatile storage medium and the non-volatile storage medium.

In embodiments of this application, unless otherwise specified or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely for differentiation for ease of description, and are not for limiting the scope of embodiments of this application. Sequence numbers of the foregoing processes do not mean an execution sequence, and the execution sequence of the processes should be determined based on functions and internal logic of the processes.

## Claims

1. A communication method, comprising:
receiving first configuration information and second configuration information, wherein the first configuration information comprises resource information of a first signal of a first cell, the second configuration information comprises resource information of M second signals of M second cells, the first signal and the second signal are signals transmitted on a link of a wake-up receiver WUR, the first cell is a camped cell of a terminal, the second cell is different from the first cell, and M is an integer greater than or equal to 1; and
receiving the first signal based on the first configuration information; and/or receiving one or more of the M second signals based on the second configuration information.

2. The method according to claim 1, wherein the receiving the first signal based on the first configuration information; and/or receiving one or more of the M second signals based on the second configuration information comprises:
receiving the first signal based on the first configuration information, and when signal quality of the first signal is less than or equal to a first threshold, receiving the one or more of the M second signals based on the second configuration information; or
when no first signal is received based on the first configuration information within first duration, receiving the one or more of the M second signals based on the second configuration information.

3. The method according to claim 1 or 2, wherein the M second cells comprise a third cell, the third cell is a neighboring cell of the first cell, and a signal corresponding to the third cell in the M second signals is a third signal; and
the receiving the first signal based on the first configuration information; and/or receiving one or more of the M second signals based on the second configuration information comprises:
receiving the first signal based on the first configuration information, and receiving the third signal based on the second configuration information.

4. The method according to claim 1 or 2, wherein the M second cells comprise a third cell and a fourth cell, the third cell is a neighboring cell of the first cell, the fourth cell is a neighboring cell of the third cell, a signal corresponding to the third cell in the M second signals is a third signal, and a signal corresponding to the fourth cell in the M second signals is a fourth signal; and
the receiving the first signal based on the first configuration information; and/or receiving one or more of the M second signals based on the second configuration information comprises:
receiving the first signal based on the first configuration information, and receiving the third signal based on the second configuration information.

5. The method according to claim 3 or 4, wherein the method further comprises:
performing handover from the first cell to the third cell based on the quality of the first signal and quality of the third signal.

6. The method according to claim 5, wherein the receiving one or more of the M second signals based on the second configuration information comprises:
receiving the third signal based on the second configuration information; and/or receiving the fourth signal based on the second configuration information.

7. The method according to any one of claims 1 to 6, wherein the terminal comprises a first receiver and a second receiver, and the method further comprises:
reporting capability information of the first receiver and/or capability information of the second receiver, wherein energy consumption of the first receiver is less than energy consumption of the second receiver.

8. The method according to claim 7, wherein
the capability information of the first receiver comprises signal receiving sensitivity information of the first receiver and/or level identification information of the first receiver; and
the capability information of the second receiver comprises signal receiving sensitivity information of the second receiver and/or level identification information of the second receiver.

9. The method according to any one of claims 1 to 6, wherein the receiving first configuration information and second configuration information comprises:
receiving the first configuration information; and
when the signal quality of the first signal is greater than or equal to a second threshold, sending first information, wherein the first information is used to request the second configuration information.

10. The method according to any one of claims 1 to 6, wherein the method further comprises: reporting the signal quality of the first signal.

11. The method according to any one of claims 1 to 10, wherein the first configuration information is carried in radio resource control release information or a system message, and/or the second configuration information is carried in radio resource control release information or a system message.

12. The method according to any one of claims 9 to 11, wherein the first threshold and/or the second threshold are/is configured by a network device, the first threshold and/or the second threshold are/is predefined in a protocol, or the first threshold and/or the second threshold are/is related to signal quality measured by the second receiver of the terminal.

13. A communication method, comprising:
sending first configuration information and second configuration information, wherein the first configuration information comprises resource information of a first signal of a first cell, the second configuration information comprises resource information of M second signals of M second cells, the first signal and the second signal are signals transmitted on a link of a wake-up receiver WUR, the first cell is a camped cell of a terminal, the second cell is different from the first cell, and M is an integer greater than or equal to 1.

14. The method according to claim 13, wherein the M second cells comprise a third cell, the third cell is a neighboring cell of the first cell, and a signal corresponding to the third cell in the M second signals is a third signal.

15. The method according to claim 13, wherein the M second cells comprise a third cell and a fourth cell, the third cell is a neighboring cell of the first cell, the fourth cell is a neighboring cell of the third cell, a signal corresponding to the third cell in the M second signals is a third signal, and a signal corresponding to the fourth cell in the M second signals is a fourth signal.

16. The method according to any one of claims 13 to 15, wherein the method further comprises:
receiving capability information of a first receiver of the terminal and/or capability information of a second receiver of the terminal, wherein energy consumption of the first receiver is less than energy consumption of the second receiver; and
the sending first configuration information and second configuration information comprises:
sending the first configuration information and the second configuration information based on the capability information of the first receiver and/or the capability information of the second receiver.

17. The method according to claim 16, wherein
the capability information of the first receiver comprises signal receiving sensitivity information of the first receiver and/or level identification information of the first receiver; and
the capability information of the second receiver comprises signal receiving sensitivity information of the second receiver and/or level identification information of the second receiver.

18. The method according to any one of claims 13 to 15, wherein the sending first configuration information and second configuration information comprises:
sending the first configuration information;
receiving first information, wherein the first information is used to request the second configuration information; and
sending the second configuration information based on the first information.

19. The method according to any one of claims 13 to 15, wherein the sending first configuration information and second configuration information comprises:
sending the first configuration information;
receiving signal quality of the first signal; and
when the signal quality of the first signal is greater than or equal to a second threshold, sending the second configuration information.

20. The method according to claim 19, wherein the second threshold is configured by a network device, the second threshold is predefined in a protocol, or the second threshold is related to signal quality measured by a second receiver of the terminal.

21. The method according to any one of claims 13 to 20, wherein the first configuration information is carried in radio resource control release information or a system message, and/or the second configuration information is carried in radio resource control release information or a system message.

22. A communication apparatus, comprising a transceiver unit and a processing unit, wherein the transceiver unit is configured to receive first configuration information and second configuration information, wherein the first configuration information comprises resource information of a first signal of a first cell, the second configuration information comprises resource information of M second signals of M second cells, the first signal and the second signal are signals transmitted on a link of a wake-up receiver WUR, the first cell is a camped cell of the communication apparatus, the second cell is different from the first cell, and M is an integer greater than or equal to 1; and
the processing unit is configured to control, based on the first configuration information, the transceiver unit to receive the first signal; and/or
the processing unit is configured to control, based on the second configuration information, the transceiver unit to receive one or more of the M second signals.

23. The communication apparatus according to claim 22, wherein that the processing unit is configured to control, based on the first configuration information, the transceiver unit to receive the first signal; and/or the processing unit is configured to control, based on the second configuration information, the transceiver unit to receive one or more of the M second signals comprises:
the processing unit is configured to control, based on the first configuration information, the transceiver unit to receive the first signal, and when signal quality of the first signal is less than or equal to a first threshold, the processing unit is configured to control, based on the second configuration information, the transceiver unit to receive the one or more of the M second signals; or
when the transceiver unit receives no first signal based on the first configuration information within first duration, a control unit is configured to control, based on the second configuration information, the transceiver unit to receive the one or more of the M second signals.

24. The communication apparatus according to claim 22 or 23, wherein the M second cells comprise a third cell, the third cell is a neighboring cell of the first cell, and a signal corresponding to the third cell in the M second signals is a third signal; and
that the processing unit is configured to control, based on the first configuration information, the transceiver unit to receive the first signal; and/or the processing unit is configured to control, based on the second configuration information, the transceiver unit to receive one or more of the M second signals comprises:
the processing unit is configured to control, based on the first configuration information, the transceiver unit to receive the first signal, and the processing unit controls, based on the second configuration information, the transceiver unit to receive the third signal.

25. The communication apparatus according to claim 22 or 23, wherein the M second cells comprise a third cell and a fourth cell, the third cell is a neighboring cell of the first cell, the fourth cell is a neighboring cell of the third cell, a signal corresponding to the third cell in the M second signals is a third signal, and a signal corresponding to the fourth cell in the M second signals is a fourth signal; and
that the processing unit is configured to control, based on the first configuration information, the transceiver unit to receive the first signal; and/or the processing unit is configured to control, based on the second configuration information, the transceiver unit to receive one or more of the M second signals comprises:
the processing unit is configured to control, based on the first configuration information, the transceiver unit to receive the first signal, and the processing unit is configured to control, based on the second configuration information, the transceiver unit to receive the third signal.

26. The communication apparatus according to claim 24 or 25, wherein
the processing unit is further configured to perform handover from the first cell to the third cell based on the quality of the first signal and quality of the third signal.

27. The communication apparatus according to claim 26, wherein that the processing unit is configured to control, based on the second configuration information, the transceiver unit to receive one or more of the M second signals comprises:
the processing unit is configured to control, based on the second configuration information, the transceiver unit to receive the third signal; and/or
the processing unit is configured to control, based on the second configuration information, the transceiver unit to receive the fourth signal.

28. The communication apparatus according to any one of claims 22 to 27, wherein the communication apparatus comprises a first receiver and a second receiver; and
the transceiver unit is configured to report capability information of the first receiver and/or capability information of the second receiver, wherein energy consumption of the first receiver is less than energy consumption of the second receiver.

29. The communication apparatus according to claim 28, wherein
the capability information of the first receiver comprises signal receiving sensitivity information of the first receiver and/or level identification information of the first receiver; and
the capability information of the second receiver comprises signal receiving sensitivity information of the second receiver and/or level identification information of the second receiver.

30. The communication apparatus according to any one of claims 22 to 27, wherein that the transceiver unit is configured to receive first configuration information and second configuration information comprises:
the transceiver unit is configured to receive the first configuration information; and
when the signal quality of the first signal is greater than or equal to a second threshold, the transceiver unit is configured to send first information, wherein the first information is used to request the second configuration information.

31. The communication apparatus according to any one of claims 22 to 27, wherein the transceiver unit is configured to report the signal quality of the first signal.

32. The communication apparatus according to any one of claims 22 to 31, wherein the first configuration information is carried in radio resource control release information or a system message, and/or the second configuration information is carried in radio resource control release information or a system message.

33. The communication apparatus according to any one of claims 30 to 32, wherein the first threshold and/or the second threshold are/is configured by a network device, the first threshold and/or the second threshold are/is predefined in a protocol, or the first threshold and/or the second threshold are/is related to signal quality measured by the second receiver of the communication apparatus.

34. A communication apparatus, comprising a transceiver unit, wherein
the transceiver unit is configured to send first configuration information and second configuration information, wherein the first configuration information comprises resource information of a first signal of a first cell, the second configuration information comprises resource information of M second signals of M second cells, the first signal and the second signal are signals transmitted on a link of a wake-up receiver WUR, the first cell is a camped cell of a terminal, the second cell is different from the first cell, and M is an integer greater than or equal to 1.

35. The communication apparatus according to claim 34, wherein the M second cells comprise a third cell, the third cell is a neighboring cell of the first cell, and a signal corresponding to the third cell in the M second signals is a third signal.

36. The communication apparatus according to claim 34, wherein the M second cells comprise a third cell and a fourth cell, the third cell is a neighboring cell of the first cell, the fourth cell is a neighboring cell of the third cell, a signal corresponding to the third cell in the M second signals is a third signal, and a signal corresponding to the fourth cell in the M second signals is a fourth signal.

37. The communication apparatus according to any one of claims 34 to 36, wherein the communication apparatus further comprises a processing unit;
the transceiver unit is further configured to receive capability information of a first receiver of the terminal and/or capability information of a second receiver of the terminal, wherein energy consumption of the first receiver is less than energy consumption of the second receiver; and
that the transceiver unit is configured to send first configuration information and second configuration information comprises:
the processing unit is configured to control, based on the capability information of the first receiver and/or the capability information of the second receiver, the transceiver unit to send the first configuration information and the second configuration information.

38. The communication apparatus according to claim 37, wherein
the capability information of the first receiver comprises signal receiving sensitivity information of the first receiver and/or level identification information of the first receiver; and
the capability information of the second receiver comprises signal receiving sensitivity information of the second receiver and/or level identification information of the second receiver.

39. The communication apparatus according to any one of claims 34 to 36, wherein that the transceiver unit is configured to send first configuration information and second configuration information comprises:
the transceiver unit is configured to send the first configuration information;
the transceiver unit is configured to receive first information, wherein the first information is used to request the second configuration information; and
the processing unit is configured to control, based on the first information, the transceiver unit to send the second configuration information.

40. The communication apparatus according to any one of claims 34 to 36, wherein that the transceiver unit is configured to send first configuration information and second configuration information comprises:
the transceiver unit is configured to send the first configuration information;
the transceiver unit is configured to receive signal quality of the first signal; and
when the signal quality of the first signal is greater than or equal to a second threshold, the transceiver unit is configured to send the second configuration information.

41. The communication apparatus according to claim 40, wherein the second threshold is configured by a network device, the second threshold is predefined in a protocol, or the second threshold is related to signal quality measured by a second receiver of the terminal.

42. The communication apparatus according to any one of claims 34 to 41, wherein the first configuration information is carried in radio resource control release information or a system message, and/or the second configuration information is carried in radio resource control release information or a system message.

43. A communication apparatus, comprising a module configured to perform the method according to any one of claims 1 to 12, or comprising a module configured to perform the method according to any one of claims 13 to 21.

44. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 12 or the method according to any one of claims 13 to 21 through a logic circuit or by executing code instructions.

45. A computer-readable storage medium, wherein the storage medium stores instructions, and when the instructions are executed by a communication apparatus, the method according to any one of claims 1 to 12 or the method according to any one of claims 13 to 21 is implemented.

46. A communication apparatus, comprising a processor, wherein the processor is coupled to a memory, the memory is configured to store instructions, and when the instructions are executed by the processor, the communication apparatus is enabled to perform the method according to any one of claims 1 to 12 or the method according to any one of claims 13 to 21.

47. A computer program product, wherein when the computer program product runs on a computer, the computer is enabled to perform the method according to any one of claims 1 to 12 or the method according to any one of claims 13 to 21.

48. A communication system, comprising at least one communication apparatus configured to perform the method according to any one of claims 1 to 12 and at least one communication apparatus configured to perform the method according to any one of claims 13 to 21.
